(19) **Europäisches Patentamt**
**European Patent Office**
**Office européen des brevets**

(11) **EP 2 667 187 B1**

(12) **EUROPEAN PATENT SPECIFICATION**

(45) Date of publication and mention
of the grant of the patent:
**13.05.2015 Bulletin 2015/20**

(51) Int Cl.:
*G01N 29/07* (2006.01)     *G01N 29/48* (2006.01)
*G01N 29/44* (2006.01)     *G01N 29/22* (2006.01)
*G01N 29/28* (2006.01)

(21) Application number: **13180931.1**

(22) Date of filing: **30.12.2011**

(54) **Ultrasonic non-destructive inspection system, in particular for composite material structures for aeronautical applications**

Zerstörungsfreies Ultraschallinspektionssystem, insbesondere für Verbundwerkstoffstrukturen für Luftfahrtanwendungen

Système d'inspection non destructif par ultrasons, en particulier de structures de matériau composite pour applications aéronautiques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2010 IT TO20101090**
**27.04.2011 IT TO20110368**

(43) Date of publication of application:
**27.11.2013 Bulletin 2013/48**

(62) Document number(s) of the earlier application(s) in accordance with Art. 76 EPC:
**11196272.6 / 2 472 254**

(73) Proprietor: **Alenia Aermacchi S.p.A.**
**00195 Roma (IT)**

(72) Inventors:
• **Cavaccini, Giovanni**
**80032 CASAMARCIANO (IT)**
• **Ciliberto, Antonio**
**80129 NAPOLI (IT)**
• **Incarnato, Ciro**
**80013 CASALNUOVO DI NAPOLI (IT)**
• **Maione, Giacomo**
**80048 SANT'ANASTASIA (IT)**
• **Sagnella, Giovanni Luigi**
**82100 BENEVENTO (IT)**

(74) Representative: **Bongiovanni, Simone et al**
**Studio Torta S.p.A.**
**Via Viotti, 9**
**10121 Torino (IT)**

(56) References cited:
**US-A- 4 475 394      US-B1- 6 205 859**
**US-B1- 6 637 266**

• **GOUEYGOU M ET AL: "A comparative study of two non-destructive testing methods to assess near-surface mechanical damage in concrete structures", NDT & E INTERNATIONAL, BUTTERWORTH-HEINEMANN, OXFORD, GB, vol. 41, no. 6, 1 September 2008 (2008-09-01), pages 448-456, XP022705482, ISSN: 0963-8695, DOI: 10.1016/J.NDTEINT.2008.03.001 [retrieved on 2008-03-15]**

**Description**

The present invention relates to a non-destructive control (or inspection) system, in particular for composite material structures for the aeronautical industry. More in detail, the present invention relates to a system implementing a method for inspection, detection and classification of defects inside structures comprising, but not limited to, cavities, delaminations, separations, inclusions and porosity, and including deformation of layers of material (in particular internal wrinkles and pockets), using a reflective ultrasonic non-destructive inspection technique.

As is known, the purpose of non-destructive testing (NDT) is to inspect, qualify and evaluate the quality of a structure without causing defects or any other changes in the structure, with regard to the design requirements. NDT methodologies range from simple visual inspection to more complex techniques, such as ultrasonic-based inspection.

With the decreasing cost of materials for the most commonly used fibres and resins, composite materials (in particular those in carbon resin, constituted by carbon fibres impregnated with epoxy resins) are applied on a large scale for making parts for means of transport, especially in the aerospace industry. In this area, their use is fundamentally tied to the need of reducing the weight of craft in order to reduce fuel consumption and increase payload; this is without impairing, or even improving, the craft's mechanical characteristics. Other advantageous characteristics regard good thermal insulation, the elimination of corrosion and the simplification (with consequent cost reduction) of maintenance schedules.

The most common carbon resin structures can be laminated (overlaid pre-impregnated layers) or of the "sandwich" type (that is, a low-weight material inserted between two carbon resin laminates); however, other forms of manufacture (for example, using fibres with resin infusion techniques) are being increasingly used. These can have manufacturing defects, intended as any deviation from the design requirements. These defects, if not detected and eliminated, can compromise the performance or the physical integrity of the structures during their working life. Certain defects cannot be repaired, in which case the manufactured structure must be discarded.

Certain defects are superficial or, in any case, detectable by visual inspection. Others are instead within the structure, for which their detection and measurement require more complex, non-destructive instrumental methodologies, generally ultrasonic based. The most common internal defects in laminated structures are delaminations, inclusions, porosity, separations, cavities and deformation of the pre-impregnated layers, generally known as internal wrinkles when oriented perpendicularly to the surface. Excluding wrinkles, these defects are normally detectably, even if not always classifiable and measurable, by means of conventional ultrasonic techniques applied during the quality control stages, or even in service, due to defects caused by accidental damage during the structure's working life (for example, delamination caused by an impact).

Ultrasonic inspections are also used in various other fields of industry (naval, automotive and energy).

In ultrasonic inspections, high frequency (well beyond hearing level) vibrational, elastic waves are introduced into the object to be examined in order to reveal internal defects, measure their depth or estimate the mechanical characteristics. As a rule, the waves are produced by probes (usually piezoelectric or piezoceramic), but can also be generated by other mechanisms, for example by means of laser excitation of the surface to be inspected, which, at this point, generates the elastic waves itself. In particular, for the analysis of carbon resins, longitudinal waves with frequency between 0.5 MHz and 15 MHz are typically used.

The generated ultrasonic beam, characterized by a law of propagation in time and space (which also results in a specific geometric form) is transmitted to the structure to be tested by means of opportune coupling means (such as water or a gel, which leaves the beam substantially unperturbed). In general, the ultrasonic inspection of a structure is carried out with the aid of a scanning system (normally two-axis for flat structures), which substantially describes a mesh, which becomes tighter as the scanning pitch in each direction becomes smaller: an inspection event is performed at each node of the mesh.

One of the most widely used ultrasonic techniques is known as "pulse echo" or reflection. This technique is based on the detection of reflections (echoes) generated when the ultrasonic waves strike discontinuity surfaces between materials having different acoustic impedances. These surfaces include defects inside the structures under test and the same surface that delimits the structure from the surrounding environment. This method is also used for locating imperfections in general and for depth measurements.

The received ultrasonic signal (echo signal) is defined by an amplitude based on time, with peaks corresponding to discontinuities (for example an internal defect) characterized, as well as by amplitude, by the time of flight (TOF), namely the time from when the first peak is received ("front echo"), corresponding to the entrance surface of the structure under consideration, and the instant of receiving the echo due to the internal discontinuity.

The time of flight T is correlated to the path X followed by the ultrasonic wave in the element under test (with $X = V_{US}T/2$, $V_{US}$ being the mean velocity of ultrasounds in the medium), and provides an indirect measurement of this path.

The reflected waves are typically displayed in a graphical form on a screen using the amplitude versus time representation, which appears as a succession of peaks each of which is caused by a reflection due to a discontinuity (in terms of acoustic impedance) in the material. The distance between two peaks is proportional to the time employed by the ultrasounds to travel the space between the two discontinuities that generated them. In addition to reflection, absorption and transmission phenomena are generally present.

Defect localization and sizing generally takes place through a process of correlation between the characteristics of the ultrasonic beam, the physical and geometrical characteristics of the material, the previously described amplitude and time-of-flight parameters and the coordinates of the scan trajectory. The results of inspection can be graphically shown in various forms, the most common ones being those known as A-scan, B-scan and C-scan.

The A-scan representation is of particular significance, as it is the one containing more information and other representations can be obtained from it. The A-Scan can be considered a representation in amplitude, in the time domain, of an echo signal. The echo signal is normally received by a transducer that converts the sound wave into an electrical signal, but can also be reconstructed by an interferometric process in laser techniques. This electrical signal, opportunely amplified, can be shown as graph on a video terminal or sampled and processed by a computer.

With regard to the other representations, the B-Scan is an ultrasonic map of a section of the component, where the A-Scans along a scan line (each point of the A-Scan is represented by a colour or tone of grey) are represented, while the C-Scan is a plan map of the component, where the colour or tone of grey of each point represents the amplitude and/or the time of flight of an ultrasonic peak reflected at that point.

As already mentioned, the known ultrasonic inspection techniques, although able to detect the majority of defects - such as porosity, delaminations, etc. - are not able to provide an accurate characterization of certain type of defects, or are not even able to detect them. This happens with internal wrinkles in particular, with which accumulations of resin, known as resin pockets, can be associated. In some cases, the pockets can be filled with different materials (adhesive, sealant, etc.). In the following, for simplicity of description, reference is simply made to pockets.

The formation process of the resin pockets is as follows (other types of pocket are created in a similar manner). Wrinkles can appear both in flat laminates and in curved areas (such as sections having a C, T, L, I or J shape, for example). When layers deform (orthogonally to the lamination plane) during manufacture, empty spaces or anomalous pressure conditions can arise. During the polymerization stage, resin in the liquid phase can fill these spaces, thereby creating channels of resin, or rather "resin pockets" (parallel to the generatrix of the curved section in the case of curved parts) that follow the profile of the first layer affected by the deformation.

Document US 4,475,394 discloses a method of determining an ultrasonic echo and also to an apparatus practicing the method.

Document US 6,637,266 discloses instrumentalities and methodologies for the non-destructive inspection, and especially for testing and evaluation of aircraft components.

Document US 4,914,952 relates to an ultrasonic method for measurement of the size of any flaw possibly existent in various kinds of solid mass.

Document by D'Orazio et al., "Automatic ultrasonic inspection for internal defect detection in composite materials", NDT & E INTERNATIONAL, BUTTERWORTH-HEINEMANN, OXFORD, GB, vol. 41, no. 2, 2007-12-05, pages 145-154 addresses the problem of automatic inspection of composite materials using an ultrasonic technique.

Document Goueygou M. et al., "A comparative study of two non-destructive testing methods to assess near surface mechanical damage in concrete structures", NDT and E. INTERNATIONAL, vol. 41, 1 Sept. 2008, p. 448-456, discloses a method of testing a concrete specimen displaying surface-breaking cracks by means of measurements of electrical resistivity and the transmission of ultrasonic surface waves.

Document US 6,205,859 discloses a method for defect detection with systems using magnetostrictive sensor techniques.

The object of the present invention is to provide a system of non-destructive inspection to overcome the problems of the known art, and also able to detect and measure the depth and/or width and/or length of internal wrinkle deformations.

According to the present invention, a system of non-destructive inspection is thus provided, as defined in claim 1.

For a better understanding of the present invention, some preferred embodiments will now be described, purely by way of a non-limitative example and with reference to the attached drawings, where:

- Figure 1A shows a structure, in particular a portion of a wing surface in carbon resin of an aircraft having a defect, in particular an internal wrinkle with a pocket;
- Figure 1B is an enlarged view of a portion of the structure of Figure 1A, where a defect is schematically represented;
- Figure 2 shows the steps of a non-destructive inspection method implemented using the system according to the present invention, in particular a method for detecting and measuring the defects of the structure in Figure 1;
- Figure 3 schematically shows, according to an A-scan representation, an echo sound signal indicative of a possible defect in the analysed structure, with low background noise;
- Figure 4 schematically shows, according to an A-scan representation, an echo sound signal indicative of a possible defect in the analysed structure, with high background noise;
- Figure 5 shows the sub-steps of the method in Figure 2;
- Figure 6 shows further sub-steps of the method in Figure 2;

- Figure 7 shows a spectrogram where the initial echo is negligible and where the peak related to the back echo and the peak of a defect are present;
- Figure 8A schematically shows a scanning system suitable for implementing the method according to the steps of Figure 2;
- Figure 8B shows an enlarged detail of the system in Figure 8A; and
- Figure 9 shows a scan head of the scanning system in Figure 8A in greater detail.

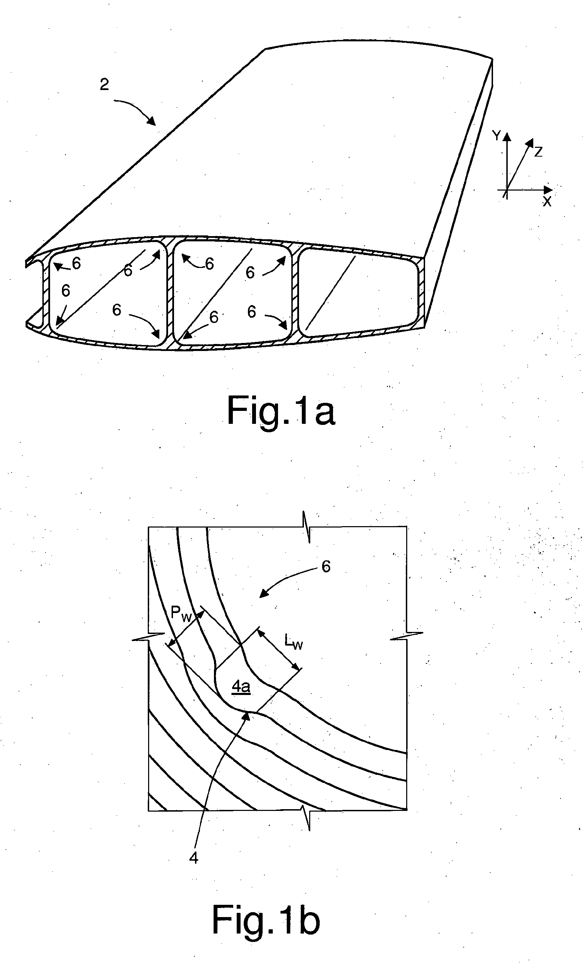

The applicant has established that wrinkle defects in composite structures, in particular internal wrinkles in carbon fibre and resin structures, can arise during the manufacture of a structure, in association with the formation of pockets. In particular, the applicant has established that during the manufacture of aircraft structures with C, T, L, I or J sections, as in a tail stabilizer for example, these wrinkles form mainly (but not exclusively) in curved areas. By way of example, Figure 1 shows a structure 2, in particular a wing structure in a composite material, such as carbon resin, of an aircraft (not shown as a whole). The applicant has established that wrinkles 4 (of the type schematically shown in the enlarged region in Figure 1 and associated with resin pockets) form mainly in the curved regions indicted by reference numeral 6. As a rule, wrinkles involve all of the layers, from the deepest ones to the most superficial layer, that are filled with resin. As can be noted in the enlargement in Figure 1, a wrinkle 4 substantially comprises an inner region 4a of resin, with a depth (indicated by reference letter D) generally between approximately 1 mm and a few millimetres or more (the maximum value is correlated to the thickness of the part at that point) and amplitude (indicated by reference letter L), in a side view, equal to a few millimetres (for example, between approximately 3 and 6 mm). The extension along the direction identified in Figure 1 by the Z-axis can vary from a few millimetres to several centimetres, up to extending, in extreme conditions, for the entire length of the structure 2.

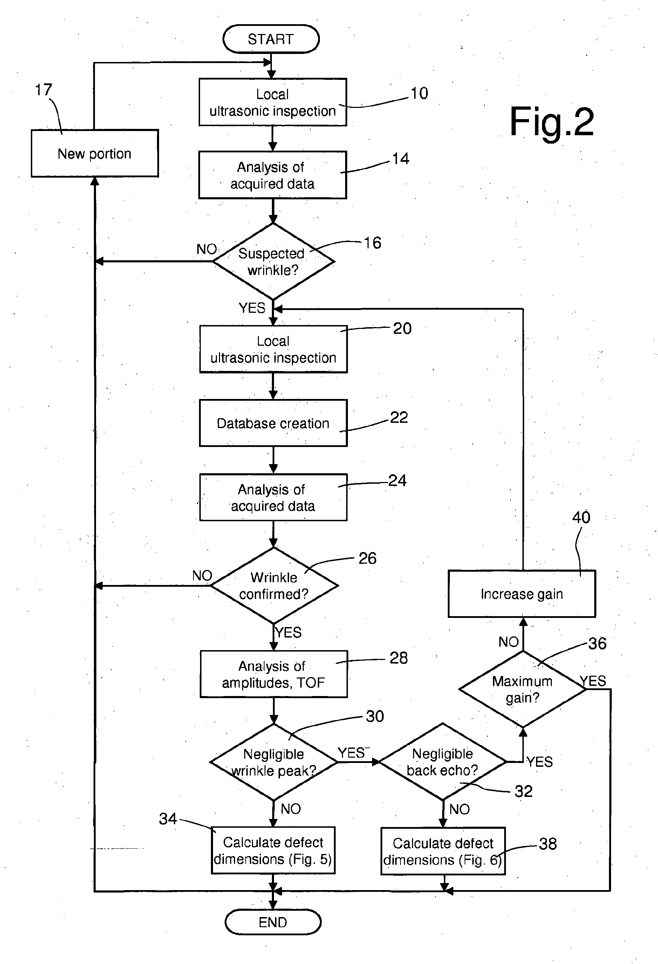

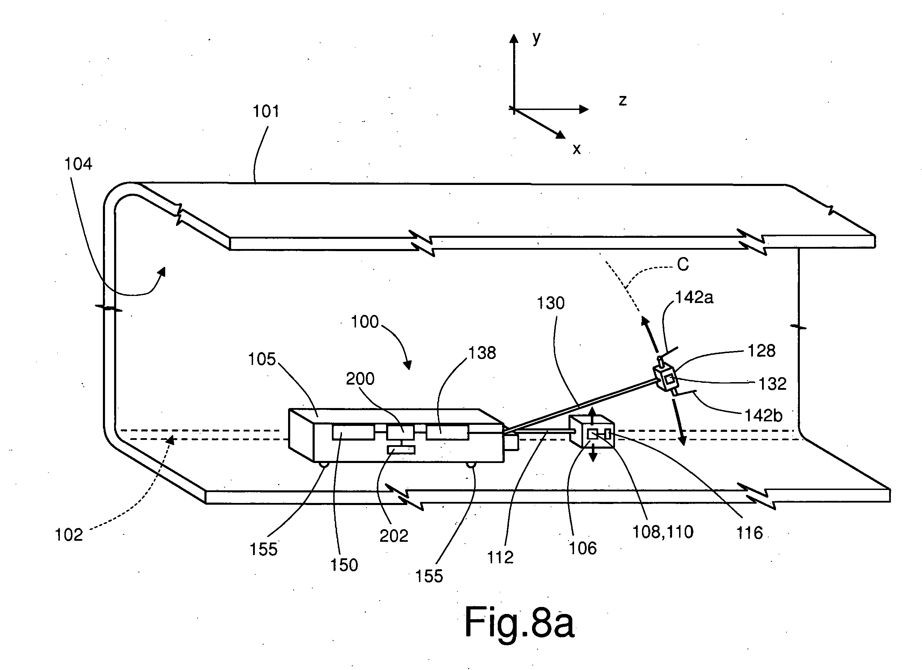

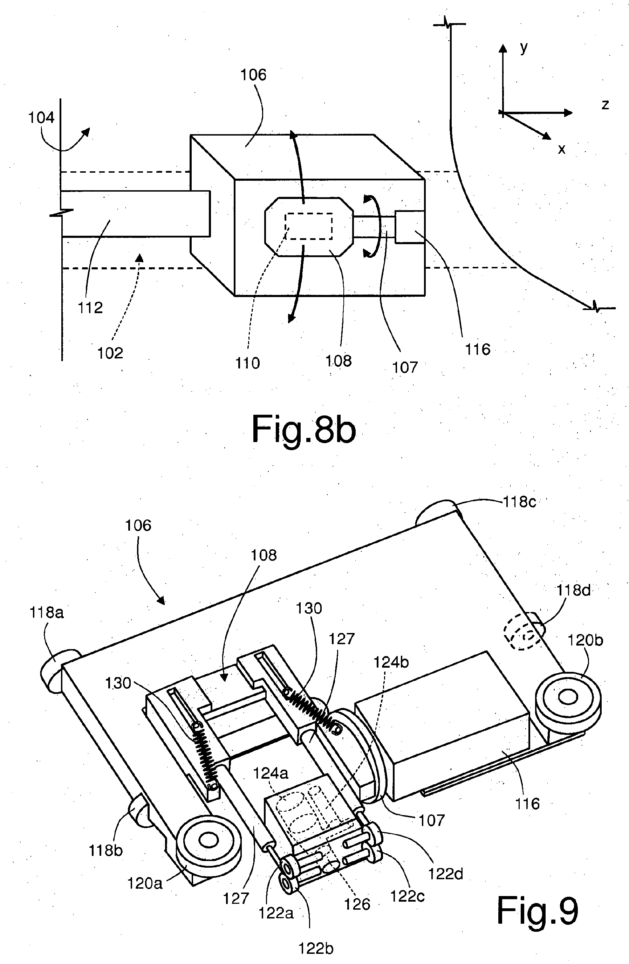

With reference to Figures 2, 5 and 6, a method which can be implemented using a system according to the present invention is described for detecting defects, including wrinkle defects of the type shown in Figure 1. This method is based on the acquisition of reflected ultrasonic waves obtained during a scanning process, with specific characteristics indicated further on, from the surfaces of interest. The system in Figure 8-13 represents an example of how this scanning can be carried out, according to the present invention.

Figure 2 shows, by means of a flowchart, the successive steps of the defect detection method, with explicit reference to the structure 2 in Figure 1 for greater descriptive clarity. Nevertheless, this method can be applied to generic flat or curved structures in a composite material and for defect detection in composite materials in general.

First of all, in step 10, an inspection is carried out using ultrasounds, in particular longitudinally reflected ones, of known type, in order to acquire first identification data of possible defects in the structure 2. The inspection according to step 10 take place using a probe of known type, configured to emit ultrasounds with a frequency in the range between 0.5 MHz and 15 MHz, for example at a frequency of 3.5 MHz, and a given set-up.

Here, set-up is intended in general as the set of inspection and acquisition related hardware and software parameters for (one or more acquisition gates, optional filters, sampling frequencies of A/D converters, parameters of the signal to acquire, gains, etc.). However, for the purposes of the description, assuming that all of the other parameters have been adequately configured for the diagnostic purposes of inspection according to standard practices, the reference parameter useful for the process is just the gain used by the emitter system (not to be confused with the excitation voltage of any transducers), here indicated as Go. This parameter can, however, be a function (generally of linear growth) of the material's thickness. The change in gain with thickness is easy to implement, for example, by a procedure known as "distance amplitude correction", commonly indicated as DAC.

Therefore, more specifically, Go indicates the gain used in the thickness range of interest for defect detection. It can be assumed that $G_0$ is such as to obtain a peak amplitude value of the back echo BE in the 80-100% range in a defect-free area. The assumption that the first inspection step (step 10 in Figure 2) is able to detect, even if not to measure, the defects of interest is a formal one, in the sense that it is implied that the inspection carried out by the inseption system according to the present invention is proposed, in general, as a closer examination of a first inspection of known type that has already been carried out (according to step 10 in Figure 2). Nevertheless, inspection carried out by the inseption system according to the present invention can be considered as a substitute for inspection according to step 10, which is therefore not necessary, but optional. The scanning of flat and curved surfaces considered here is carried out using the system in Figure 8.

The choice of the frequency values for the ultrasounds to be used depends on various factors, in particular on the type of structure (dimensions and material) that it is wished to analyse and on the type of defect that it is wished to detect.

Typically, frequencies from 3 MHz to 10 MHz are used for the inspection of structures of a few millimetres to a few tens of millimetres, and for defects with minimum dimensions not below 2-3 mm.

The data acquired by the inspection according to step 10 can be indifferently represented according to one or more common representations, such as the A-scan, B-scan and C-scan, for example.

This data is converted into a digital format and stored for the subsequent analysis steps.

Processing then continues, at step 14, with examination of the data acquired by means of the ultrasonic technique. This step can include the analysis of a C-scan representation, visually evaluated by a qualified operator.

Through evaluation, possibly combined, of A-scans and C-scans, it is possible to have a first indication regarding the possible presence of a defect (in particular, of the presence of wrinkles and/or pockets for the specific case described).

In the case where the described steps 10-14 provide definitely negative indications regarding the presence of a defect in the structure analysed (NO exit from step 16), return is made to step 10 and analysis of the structure continues on a portion that has not yet been analysed (the probe and the transducer are moved to this portion, in step 17). Should that not be the case (suspected wrinkle 4 and YES exit from step 16), processing continues with a new local inspection (step 20) of the area of the structure 2 (for example, a portion indicated by reference numeral 6 in Figure 1) where, based on the previously acquired data, the presence of a wrinkle 4 is suspected.

In order to proceed with step 20, certain parameters must be set that, as a whole, can be indicated as preliminary inspection parameters. More in detail, the following are identified (possibly by means of specific tests on a sample with dimensional, geometrical and material characteristics similar to those of the structure under consideration):

a) the time duration $T_w$ (greater details provided further on) of the acquired waveform and the peaks that form the A-Scan, and the relative instant $T_{RMAX}$ in which a typical peak has a maximum, starting from its initial instant;

b) the amplitude of the front echo FE, intended as the interval ($A_{FE}-\Delta A_{FE}$, $A_{FE}+\Delta A_{FE}$), where $\Delta A_{FE}$ is the statistical oscillation of the amplitudes of interest around the amplitude $A_{FE}$, and can be assumed to be $2.5\sigma$ (where $\sigma$ is the standard deviation calculated on the amplitudes of a sample of around a hundred front echoes) or established by other standard statistical techniques;

c) the amplitude of the back echo BE, intended as the interval ($A_{BE}-\Delta A_{BE}$, $A_{BE}+\Delta A_{BE}$), where $\Delta A_{BE}$ is the statistical oscillation of the amplitudes of interest around the amplitude $A_{BE}$. $\Delta A_{BE}$ can be established in a similar manner to $\Delta A_{FE}$ and, usually, is approximately equal to $\Delta A_{FE}$;

d) the mean velocity $V_{US}$ of the ultrasounds in the material of which the structure under analysis is composed; this can be estimated from reference literature or with standard statistical methods; for example, it is possible to estimate it via a best fit with minimum $\chi^2$ of the equation $V_{US}=2S/t_{peak}$, taking a plurality of measurements (varying, for example, the velocity of the ultrasounds of each measurement in the 2700-3400 m/s range, with 50 m/s steps), on a sample of, for example, around a hundred waves related to an area of constant and known thickness S of a reference component having a similar composition and stratification to that of the structure of interest, without any internal defect, and measuring, for each wave, the time $t_{peak}$ between the maximums of the front echo and the back echo;

e) the maximum ultrasonic amplitude $A_{n-max}$ of noise in the material of which the structure under analysis is composed; this can be determined by standard statistical methods, or assumed to be $\mu+3\sigma$ (where $\mu$ and $\sigma$ are, respectively, the mean value and the standard deviation of the amplitudes of the part of wave between the front echo and the back echo acquired over about a hundred points of a reference component similar to that of the previous point);

f) the amplitude of the noise, intended as the interval ($A_n-\Delta A_n$, $A_n+\Delta A_n$), where $\Delta A_n$ is the statistical oscillation of the amplitudes of interest around a value An and can be established in a similar manner to $\Delta A_{FE}$ on the amplitudes of the previously specified wave parts;

g) the entity of statistical oscillation of the peaks in time $\Delta T$; $\Delta T$ can be established by standard statistical methods or assumed to be $2.5\sigma$, where $\sigma$ is the standard deviation calculated on the times of flight of a sample of, for example, around a hundred back echoes;

h) the maximum thickness $P_{max}$ of the structure under analysis (for parts of variable thickness or geometry, $P_{max}$ is a function of the scanning variables);

i) the maximum depth $P_{d\_max} \leq P_{max}$, at which it is expected (or there is interest) to detect a defect;

l) the minimum percentage reduction $\alpha$ of the amplitude of the back echo caused by the presence of the defect; this parameter, for which some typical values are provided further on, depends on the type of defect.

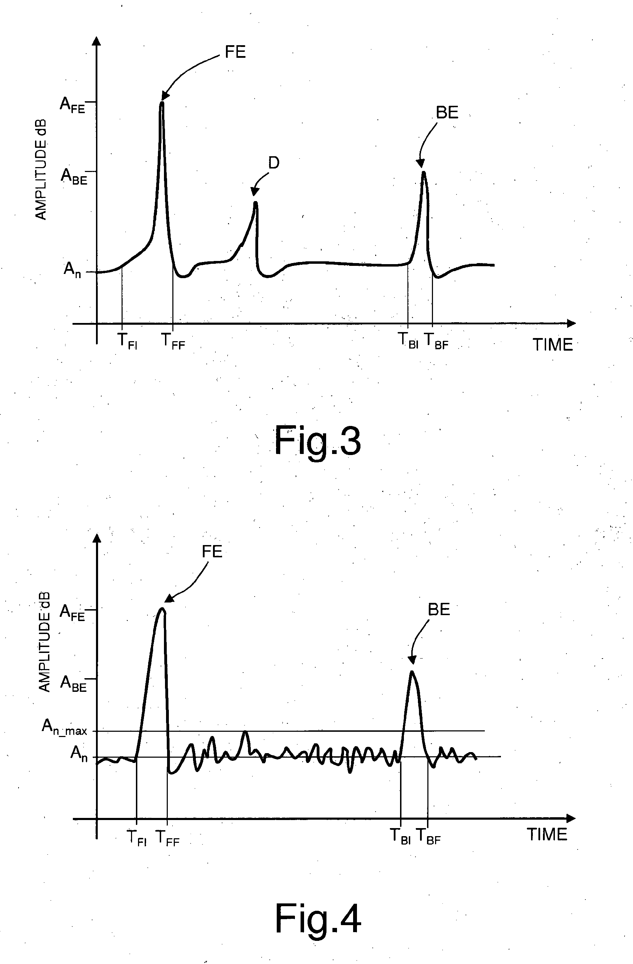

The duration $T_w$ can be estimated by means of the duration measurement of the FE ($T_{FE}$) or BE ($T_{BE}$) in a reference component as previously defined, or in an area of the part under examination that is free of defects and similar, in thickness and composition, to the portion under analysis (see Figure 4). In the absence of interference phenomena on the front and back echoes, $T_{FE}$ and $T_{BE}$ of the back echo are on average equal to $T_w$ to within $\Delta T$, as expressed by the following formulae (1) and (2):

$$T_{FE} = T_{FF} - T_{FI} = T_w \pm \Delta T \tag{1}$$

$$T_{BE} = T_{BF} - T_{BI} = T_w \pm \Delta T \qquad\qquad (2)$$

where $T_{FF}$ and $T_{FI}$, and $T_{BF}$ and $T_{BI}$ are respectively the initial and final instances of the front echo and of the back echo. The initial instant and the final instant can be respectively estimated as the instant related to the leading edge of the pulse, where the amplitude becomes equal to An (or approximately 18 dB of the maximum amplitude), and the instant related to the trailing edge of the pulse, where the amplitude becomes equal to An (or, also in this case, approximately 18 dB of the maximum amplitude). $T_{RMAX}$ can be estimated in an entirely similar manner.

The local scanning according to step 20 of Figure 2 takes place by preferably setting the following scanning parameters and with the following post-processing:

a) inspection by means of an ultrasonic inspection technique (preferably with a wideband probe, for example 2-8 MHz) and acquisition of complete reflection waves (for example represented as an A-Scan) with a sampling frequency equal to or greater than 100 MHz (in the time domain) and with at least 6-bit digitalization or sampling of the wave amplitudes.

b) gain Go as previously defined;

c) acquisition gate Cacq with width greater than $2 \cdot (P_{max}/V_{US})$ and with a starting instant at the origin of peak of the front echo FE (assumed, for simplicity, as coincident with the origin of the time axis and equal to 0 $\mu$s) ;

d) gate for a first C-scan representation (henceforth indicated as "C-scan1") with starting instant at $T_{FF} + \Delta T$, final instant of at least $3 \cdot (P_{max}/V_{US})$, minimum acquisition level of $A_{n\_max} + \Delta A_n$ (amplitude value below which acquisition is not performed) and "maximum peak" acquisition mode. This mode indicates that each point of the generated C-Scan is related to the maximum amplitude of the A-Scan in that point inside the set gate, provided that this amplitude is greater than the set level;

e) gate for a second C-scan representation (henceforth indicated as "C-scan2") for monitoring the back echo, with start and end at $2 \cdot (P_{max}/V_{US}) - \Delta T$ and $3 \cdot (P_{max}/V_{US})$ respectively, minimum acquisition level of $A_{n\_max} + \Delta A_n$ and with "maximum peak" or "first peak" acquisition mode. This last mode indicates that each point of the generated C-Scan is related to the first peak (with amplitude greater than the set level) of the A-Scan in that point, within the set gate amplitude.

Processing then continues with local ultrasonic scanning near to the presumed defect (preferably in a plurality of points in the area of the presumed defect). For each scanning direction, it is preferable to use a scanning pitch equal to or less than 1 mm, and in any case not greater than a third of the minimum dimension, in the scanning direction, of the defect that it is wished to detect.

Processing then continues, at step 22 of Figure 2, with the creation of a database for organizing the data acquired by the previous step 20 and, in particular, the data acquired according to the Cacq, C-scan1 and C-scan2 settings, or rather, more precisely, the complete waveform with Cacq for each scan point, the time-of-flight value (TOF) and amplitude of the back echo for C-scan1, and the time-of-flight value (TOF) and amplitude of the back echo for C-scan2.

Then, in step 24, processing continues with examination of the information collected in step 22. This step can be visually performed by a qualified operator or automatically, by a computer.

In particular, an analysis is carried out on the representation according to C-Scan1 and C-Scan2: in the following, it is assumed that the characteristics of the time-of-flight and amplitude of the back echo, even in assessed in C-Scan1 (this happens when there are no defects or when the peaks of the defects produce smaller amplitudes in the back echo), are then confirmed in C-Scan2.

The applicant has, in fact, established that defects (in particular wrinkles 4) associated with deep pockets, especially depths exceeding $(T_w + \Delta T)V_{US}$, cause reflection of the incident ultrasonic signal (refer to example in Figure 3, with second peak D) having a time-of-flight value greater than $T_w + \Delta T$ and an amplitude normally greater than that of the back echo BE; there is also a reduction in the peak amplitude of the back echo BE equal to at least $\alpha$ (normally greater than 70%).

Even in the case where the second peak D is not visibly perceptible (because it is below the noise threshold, for example), there is still a reduction in the peak amplitude of the back echo signal BE equal to at least $\alpha$ (normally greater than 20%), associated with its translation along the time axis by more than $T_{BE} + \Delta T$.

In addition, the applicant has also established that in the further supposition of defects not associated with pockets, or associated with pockets that are undetectable as they are, for example, very superficial (indicatively at a depth of less than $(T_w + \Delta T)V_{US}$), there is still a reduction in the peak amplitude of the back echo signal BE with a percentage value of $\alpha$ (normally greater than 20%).

It should be noted that the previously indicated considerations are applicable both to the individual C-Scan representations (where amplitudes and times of flight are represented with two different images) and to the combined representations (amplitudes and times of flight melded into a single image). In general, the indication of a pocket 4 associated with a wrinkle 4 appears as a linear indication (i.e. with width/length ratio <<1) and with a time of flight $T_g$ almost constant within statistical oscillation. The following relation (3) is applicable for the time of flight $T_g$ of a wrinkle:

$$(T_w + \Delta T) \, V_{US} \; < \; T_g \; < \; 2 \, (P_{max}/V_{US}) - \Delta T \qquad\qquad (3)$$

The amplitude value Ag of the ultrasonic peak associated with the resin pocket, within statistical oscillation, is given by the relation (4):

$$Ag \; = \; \alpha \cdot (A_{BE} - \Delta A_n) \qquad\qquad (4)$$

If the evaluations according to step 24, in accordance with that previously described, confirm the probable presence of a defect (step 26), then (YES exit from step 26) processing passes to step 28. Vice versa, if the presence of a defect is excluded on the basis of the evaluations according to step 24 (NO exit from step 26), processing passes to step 17 and therefore to the scanning of a new portion of the structure 2.

Step 28 is based on the same evaluation criteria of step 24. Step 24 establishes whether there are detectable indications of a defect (in particular, a wrinkle 4), i.e. if there are longitudinal indications formed by: (i) peaks in time of flight earlier than expected with respect to the back echo (detected through analysis of C-Scan1) or (ii) peaks of reduced amplitude and delayed with respect to the back echo in defect-free areas (detected through analysis of C-Scan1 and C-Scan2); in this last case, peaks related to wrinkles or associated pockets are not revealed. Step 28 identifies which of the two cases (i) and (ii) described here is applicable. Finally, if neither of the two cases (i) and (ii) is established, the preceding decision step 26 generates a NO. Vice versa, entry to step 28 means that at least one of the two cases (i) and (ii) has been established.

If from the analysis according to step 28 it is found that only case (ii) has arisen, then decision step 30 generates a NO, which leads to the execution of step 34.

Vice versa, if from the analysis according to step 28 it is found that only case (i) has arisen, then decision step 30 generates a YES and processing passes to step 32.

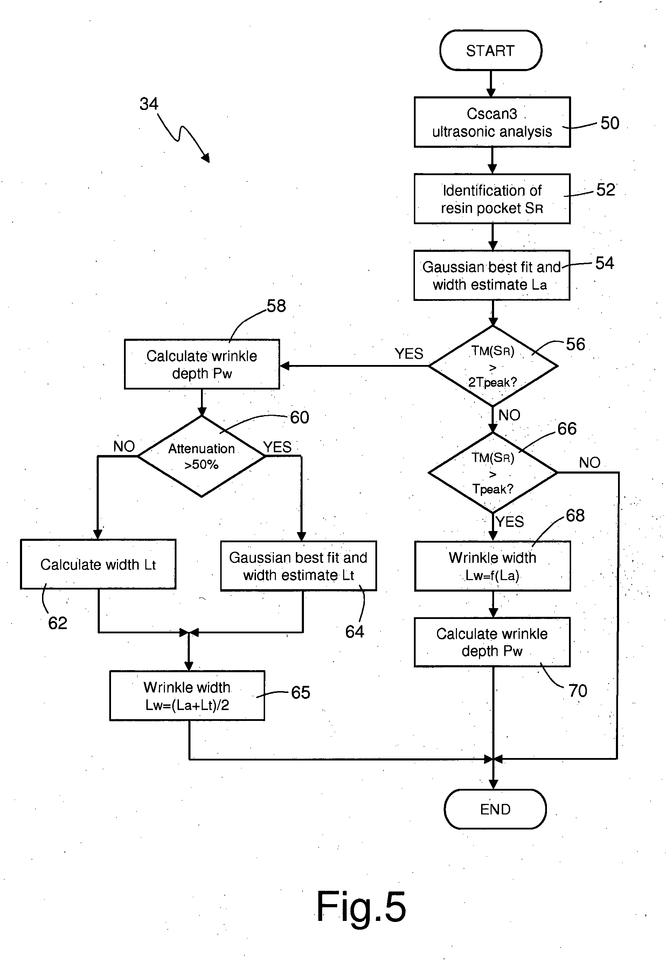

In greater detail, when decision step 30 is entered, the presence of a defect 4 has already been confirmed by amplitude evaluations on the back echo and/or by the presence of a peak in the time of flight associated with the defect. In step 30, it is assessed whether the confirmation derives just from the presence of a peak in the time of flight associated with the defect, which, as stated, generates the NO exit, with entry to step 34. This step comprises sub-steps of a procedure described in greater detail further on with reference to the flowchart in Figure 5.

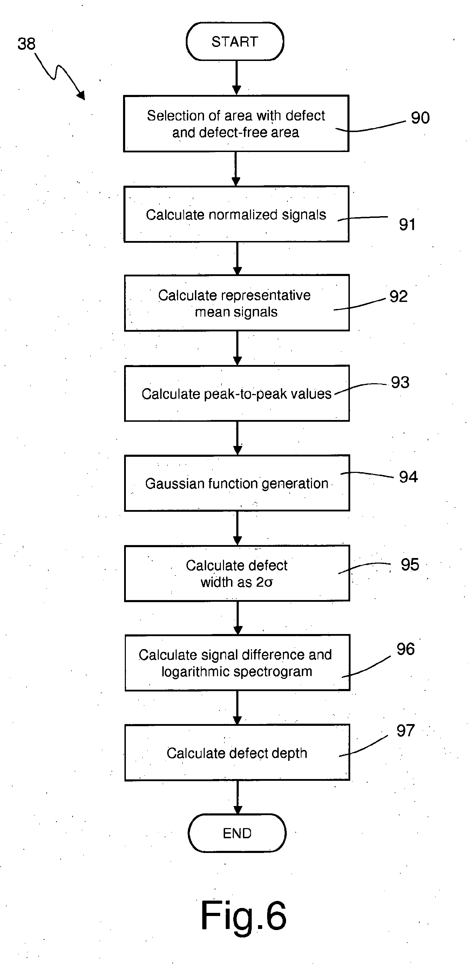

If in step 30 confirmation does not come exclusively from the presence of a peak in the time of flight associated with the defect, but also (or just) from amplitude evaluations on the back echo, the YES exit is generated and step 32 is entered. In this step 32, through analysis of C-Scan1 and C-Scan2, it is assessed whether the amplitude of the back echo BE is negligible with respect to the defect-free case. In the case where the variation in the back echo BE is significant (NO exit from step 32), processing passes to step 38, which comprises steps of a procedure described in greater detail further on with reference to the flowchart in Figure 6. Vice versa (YES exit from step 32), a change is made to the set-up in terms of gain and the area is inspected again (step 36). The basic principle underpinning step 36 is that if the amplitudes of both the defect and the back echo are negligible (for which there is no useful data for defect characterization and measurement), this could be due to insufficient gain (in this step equal to $G_0$) ; it is therefore necessary to increment it and repeat the scan (step 40). However, the applicant has established that, with the already indicated assumption that the Go has been opportunely chosen on the basis of standard practices, an increment of more than 12 dB does not normally result in any significant improvement, primarily due to the excessive amplitude that noise could assume. The limit value of 12 dB is only indicative, as it depends on many factors (including instrumentation and cabling noise, probe performance, environmental disturbances and the material under consideration). In any case, before passing to step 40, it should be checked that the limit value has not been exceeded (decision step 36): in the case of the YES exit, either further examination is possible (including re-scanning the area in the case where conditions are found that could have disturbed scanning, such as surface contaminations or geometrical-dimensional irregularities) or the defect is below the limit of measurability.

The limit of measurability should be checked by means of an experimental process (experimental calibration), based on a statistically sufficient number of representative samples of the parts to be inspected and containing real, simulated or artificially induced defects similar to those of interest. The representativeness of the samples must be assured in terms of material, type of stratification, thicknesses and geometries. The thicknesses and the geometric parameters (radii, angles and curvatures) must run from the minimum to the maximum value for the parts of interest. The defects must have certain characteristics regarding dimensions (at least minimum and maximum thickness along the direction of propagation of the ultrasounds, minimum and maximum width in the related scanning direction and minimum length in the corresponding scanning direction), position (minimum and maximum depth from the ultrasounds entrance surface, arc position when dealing with a T-shaped part or similar, etc.) and shape (square, parabolic, etc.). The measurement process is calibrated according to all of the configurations represented by the samples, the dimensions of the defects of which also represent the documented limits of measurability.

In the flowchart in Figure 2, the inspection of a new portion of the structure under consideration (step 17) is indicated as the next action in any case.

Returning to step 36, the current gain value is calculated. In particular, it is checked whether the current gain $G_C$ exceeds a certain threshold, for example, equal to $G_0+12dB$. Within the previously indicated limits and the considerations, a current gain $G_c$ above the set threshold (for example $G_C>G_0+12dB$) is considered unacceptable and the scanning of the area under examination is interrupted (YES exit from step 36). In this case, the scanning of the structure under examination can proceed with a new portion of the structure (passage to step 17). Conversely, if the current gain $G_C$ has not reached a value beyond the threshold, processing passes (NO exit from step 36) to step 40.

In step 40, the current gain $G_C$ is incremented by a predefined value, for example 6 dB, and processing continues with a new inspection (step 20) of the same area already analysed and for which a result considered acceptable has not been achieved. Processing consequently continues at step 22 to acquire new data to analyse and processing continues again with the already described steps.

Before passing to the description of the procedure according to step 34 of Figure 2, as a preliminary, it should be explained that, considering a given transverse section of the part, expressible as a number of layers (or plies) starting from the entrance surface of the ultrasonic signal, wrinkle deformations generally regard only a certain number of layers.

In the following, the variable that indicates the layer will be indicated by symbol $\varsigma$. The distribution and entity of these deformations depend on the material and manufacturing process. In the case of a wrinkle 4 of the type in Figure 1, the applicant has established that at a given layer $\varsigma$ starting from the first layer situated at the entrance surface of the ultrasonic signal, the width/depth ratio of the wrinkle 4 (ratio $\rho=L_W/D_W$ with reference to Figure 1, where $L_W$ is the width L of the wrinkle in the related scanning direction and $D_W$ is the depth D of the wrinkle along the direction of propagation of the ultrasounds) is a function of the width/depth ratio of the pocket, as expressed by the relation (5):

$$\rho_\varsigma \equiv \frac{L_{W\varsigma}}{P_{W\varsigma}} = R\left(\frac{L_R}{P_R},\varsigma\right) = \frac{R_L(L_R,\varsigma)}{R_P(P_R,\varsigma)} \qquad (5)$$

where: $L_{W\varsigma}$ and $P_{W\varsigma}$ are respectively the width and depth of the wrinkle at layer $\varsigma$, $L_R$ and $P_R$ are respectively the width and depth of the pocket, and R, $R_L$ and $R_P$ are functions of $L_R$, $P_R$ and $\varsigma$.

The method of measurement proposed by the applicant is independent of the details of the functional relation (5). The applicant has however verified some of these functional relations, as detailed in the following. In particular, a common situation is that where the deformation of the first ply, or layer - $\varsigma=1$ - of material in carbon resin struck by the ultrasonic beam and defined by $L_{W1}$ and $P_{W1}$ with respect to the ultrasound entrance surface (presumed in the direction of the pocket), faithfully follows the deformation of the pocket (defined by $L_R$ and $P_R$), or rather:

$$\rho_1 = \frac{L_{W1}}{P_{W1}} = \frac{L_R}{P_R} \qquad (6)$$

This wrinkle, for inwardly directed deformations, is also the most severe (smaller $\rho$). The functional relations R, $R_L$ and $R_P$ can be estimated in the experimental calibration stage of the process and, if necessary, from destructive or visual analysis of wrinkles in real cases or with artificially induced wrinkles. However, it has been verified that in the case of a wrinkle originating from the ultrasound entrance surface, the severity of the wrinkle decreases as the thickness

increases (i.e. $\rho$ increases as a function of $\varsigma$ ). More in general, the applicant has also established that, indicating the $L_R/P_R$ ratio of the most severe wrinkle (main wrinkle) detected in a given section of the material as $\rho_{sev}$, the deformations in front and behind (in thickness, intended as the direction of propagation of the ultrasonic waves) gradually become less severe, i.e. the related $\rho$ increases. A deformation is considered less severe here with respect to the main one if, approximately, $\rho > 4.5\rho_{sev}$. On this basis, indicating the number of layers (starting from the first one with the most severe wrinkle) beyond which the wrinkles lose severity as $n_\varsigma$, the applicant has established that the following approximation formula (6a) is applicable:

$$\rho_\varsigma = \rho_1 e^{\varpi\left(\frac{m}{m+1-\varsigma}-1\right)} \qquad\qquad (6a)$$

with $\omega \cong (4.6m - 20)/\sqrt{n_\varsigma^3}$

where m is the total number of layers of the structure portion under analysis. The applicant has established that formula (6a), which can be refined by the experimental calibration process, adequately describes the type of wrinkles considered up to a number of layers $n_\varsigma \approx 0.5m$, which represents one of the most frequent situations. For larger values, it progressively becomes a worse approximation as $n_\varsigma$ grows. Formula (6a) is also applicable in the case where there are no pockets, for which $L_W/P_W$ can no longer be expressed in terms of $L_R/P_R$, but is still dependent on $\varsigma$.

A more generic situation than that regarding formula (6a) is the one where the main wrinkle is found at the level of a layer $\varsigma = n > 1$. In this case, the applicant has established that the following formula (6b) is applicable:

$$\rho_\varsigma = \left[(m+1-n)(n-1)/(m+1-\varsigma)(\varsigma-1)\right]\rho_n e^{\Omega|n-\varsigma|} \qquad (6b)$$

where $\Omega$ is a parameter obtainable through experimental calibration. Formula (6b) can be refined by means of the calibration process. Considering the thickness of the portion under analysis (intended in the direction of propagation of the ultrasonic waves), $\Omega$ depends on m and is a decreasing function of the number of layers above ($n_u < n$) and below ($n_1 > n$) the layer with the most severe deformation. In any case, the deformation is considered severe for these layers (i.e. approximately $\rho \le 4.5\rho_{sev}$). The applicant has established that for m<80, the dependency of $\Omega$ on m and $n_u$ (with $n_l \approx n_u$) is approximately given by the formula (6c):

$$\Omega = \left(0.008m + 2.7\right) \cdot e^{-(-0.004m+0.65)n_u} \qquad\qquad (6c)$$

In formulae (6a) and (6b), it is assumed that the wrinkles progressively disappear (p tends to infinity) at the ends of the part (entrance and back surfaces for the ultrasounds). Another case encountered by the applicant is that where a certain number of layers have a constant deformation ($\rho$=constant) which then disappears in the immediately overlying and underlying layers. The last case encountered by the applicant concerns the situation where the wrinkles (with or without pocket), starting from the main one at a layer n, progressively decrease in severity (p increases), but without becoming negligible, up to the surfaces of the part. In the case where the deformation starts in a layer n and only propagates into the underlying layers, the applicant has established that the following formula (6d) is approximately applicable:

$$\rho_\varsigma' = \left[A(m+1-n)(n-1)/n_\varsigma(m-s)\right]\rho_n e^{B|n-\varsigma|+(n-s)} \qquad (6d)$$

where A and B (with $B \approx 1$) are parameters obtainable by experimental calibration. In this case as well, the formula (6d) can be refined by means of the calibration process. A similar formula is applicable for a deformation that propagates into the overlying layers.

The procedure according to step 34 of Figure 2, which enables estimating the width and depth of the wrinkle in the previously defined conditions, will now be described, with reference to Figure 5. In the following, to simplify the description of the procedure, the dependency on $\varsigma$ will be omitted, assuming that the wrinkle parameters are determined for the main wrinkle and extended to the other layers by means of formula (5). With reference to the notations used in formula (5), $L_W$ and $P_W$ respectively indicate the width $L_{W\varsigma}$ and the depth $P_{W\varsigma}$ of the main wrinkle in layer $\varsigma$.

The procedure in Figure 5 starts with step 50. A new ultrasonic inspection is carried out on the structure portion including the suspected wrinkle 4, the results of which are shown by means of a C-scan representation (henceforth referred to as C-scan3 for simplicity). For the purposes of the C-scan3 representation, the parameters to be considered are: a gate width equal to $1.5T_{BE}$, where $T_{BE}$ is, as stated, the time duration of the peak of the signal related to the back echo BE; a starting instant equal to $T_{BI}-\Delta T$; and an amplitude level equal to $A_{n\_max}+\Delta A$. The acquisition mode is preferably of the maximum peak type. C-Scan3 can be obtained either during the same scan in the already-described step 20 or with a new scan.

The subsequent step 52 indicates finding the indication of the pocket on C-Scan3. In particular, the section $S_R$ related to the pocket to be measured (along the width dimension) is identified in step 52 on the basis of the C-scan3 representation.

After this identification, processing passes to step 54. This step regards measuring the width of $S_R$, indicated here as $L_a$, by means of amplitude values. The sequence of amplitudes of $S_R$ based on the related scanning axis form a curve that can be approximated by means of standard best-fit procedures. In particular, the applicant has established that for structures with a T shape or, in any case, with curved areas and for wrinkles originating in the curves, the sequence of the ultrasonic amplitudes of $S_R$ along the width can be approximated with a Gaussian function for the purposes of measurement in question. There is Ga(k), with k=1,...,q as the values obtained from the best-fit function (Gaussian, for example) and q as the number of scan points (with scanning pitch s, for example, equal to approximately 1 mm) which entirely cover $S_R$, as well as max[Ga(k)], the maximum of Ga(k). $L_a$ is estimated using the formula (7):

$$L_a = \varphi\left(\left|k2-k1\right| \cdot s\right) \tag{7}$$

where $\varphi$ is a function definable on the basis of a best-fit function. The applicant has established that this is normally a linear function, which can be approximated with the same function. In any case, it can be experimentally estimated in the calibration stage; k2 and k1 are indices of Ga(k) such that: k1<index of max[Ga(k)] <k2; Ga(k1) and Ga(k2) are the values closest (approximation by defect) to $h_1 \cdot$max[Ga(k)]. Factor $h_1$ is typically equal to 0.126 (18 dB) and, if necessary, can be estimated more precisely in the calibration stage.

Control then passes to step 56, which checks the width and depth measurements of the wrinkle, determining whether the maximum detected time-of-flight value (indicated as $T_M(S_R)$) related to the pocket of section $S_R$ is greater than a threshold value, in particular that of 2Tg.

If $T_M(S_R)$ is greater than twice the time duration $T_g$ of the peaks (calculated with the A-Scan representation), then the peak of the pocket is clearly separate from the front echo and processing passes to steps 58-65 through the YES exit from step 56.

Failing this (NO exit from step 56), control passes to a further decision step 66: if $T_M(S_r)$ is greater than $T_g$, the time of flight associated with the pocket can still be identified and processing passes to steps 68-70; instead, if $T_M(S_r) \leq T_g$, the process terminates, as the reflection related to the pocket cannot be separated from that related to the front echo.

With reference to steps 58-64, namely in the case where the reflection of the pocket is completely separate from the front echo, first of all the depth $P_W$ of the wrinkle is calculated (step 58), using $T_M(S_R)$ and the mean velocity $V_{US}$ of the ultrasounds, according to the formula (8):

$$P_W = \left[T_M\left(S_R\right) + \tau_1\right] \cdot \frac{V_{US}}{2} \tag{8}$$

As a rule, the algebraic term $\tau_1$ has a zero value; nevertheless, during the calibration stage, the term $\tau_1$ can be non-zero and is useful for the transformation of the times of flight in depth.

Passage is then made to steps 60-65, which regard measurement of the width (indicated here as $L_t$) of $S_R$ by means of time-of-flight values and the subsequent calculation of the width of the wrinkle.

In step 60, it is checked whether the value of $\alpha$ (which indicates the percentage reduction factor of the back echo due to the defect) is more than 50%.

If $\alpha \leq 0.5$ (NO exit from step 60), $L_t$ can be estimated (step 62) with the measurement of the segment on C-Scan3 (in time of flight) that delineates the width of $S_R$; passage is then made to step 65 for the evaluation of $L_W$.

If $\alpha > 0.5$ (YES exit from step 60), $L_t$ can be estimated (step 64) via a similar procedure to that employed for the amplitudes in step 54. In this case, the sequence of the times of flight of $S_R$ based on the relative scanning axis form a curve that can be approximated by means of standard best-fit procedures. For the times of flight, the applicant has also established that for structures with a T shape or, in any case, with curved areas and for wrinkles originating in the curves, the sequence of the times of flight of $S_R$ along the width can be approximated with a Gaussian function for the purposes of measurement in question. There is Gt(j), with j=1,...,q as the values obtained from the best-fit function (Gaussian, for example) and q as the number of scan points (with scanning pitch s, for example, equal to approximately 1 mm) which entirely cover $S_R$, as well as max[Gt(j)], the maximum of Gt(j). $L_t$ is estimated using the formula (9):

$$\mathrm{L_t} = \psi\,(\,|\,\mathrm{j2-j1}\,|\,\cdot\mathrm{s}) \tag{9}$$

where $\psi$ is a function definable on the basis of a best-fit function. The applicant has established that this is normally a linear function, which can be approximated with the same function. In any case, it can be experimentally estimated in the calibration stage. Indices j2 and j1 are indices of Gt(j) such that j1 < index of max [Ga(j)] < j2, and Gt(j1) and Gt(j2) are the values closest (approximation by defect) to $h_2 \cdot$max [Gt(j)]. Factor $h_2$ is typically equal to 0.126 (18 dB) and, if necessary, can be estimated more precisely in the calibration stage. This step also leads to step 65.

Step 65 substantially consists in evaluating the width of the wrinkle using the formula (10):

$$L_W = \frac{L_a + L_t}{2} \tag{10}$$

The process ends upon completion of step 65.

As anticipated, steps 68-70 (YES exit from step 66) are dedicated to evaluating wrinkle width (step 68) and depth (step 70) in the case where the defect echo is not clearly separated from that of the front echo.

In step 68, as the time-of-flight values cannot be reliably used in this case, $L_W$ is only calculated via $L_a$, using the formula (11):

$$L_W = L_a \tag{11}$$

The wrinkle depth $P_W$ in step 70 is calculated using the formula (12):

$$P_w = \left[ T_M(S_r) - T_g + T_{RMAX} + \tau_2 \right] \cdot \frac{V_{US}}{2} \tag{12}$$

In this case as well, the applicant has established that an additional algebraic term ($\tau_2$ in formula (12)) might be needed in the calibration stage for transformation of the times of flight in depth. It should be remembered that $T_{RMAX}$ is the instant when a typical peak is at its maximum, starting from its initial instant.

The steps of the procedure according to step 38 of Figure 2 will now be described, with reference to Figure 6. As already stated, step 38 is entered when indication of the presence of a defect is provided just by a lowering of the peak amplitude of the back echo BE and the echo signal due to defect might be masked by high background noise.

The starting data considered for analysis is that of C-Scan3 and the set of reflected complete waves (considered here in radio frequency) acquired with Cacq.

An area containing the defect ($Z_w$) and a defect-free area ($Z_b$) are identified on C-Scan3. This last area must be as close as possible to the first one or, in any case, related to a portion of the part or a reference standard sample with the same geometrical and dimensional characteristics as those of the area with the defect. $Z_w$ and $Z_b$ are typically rectangular areas of small size containing a sufficient number of points for statistical analysis, for example 100 points (corresponding to 100 mm$^2$, in the case where the scanning pitches in the two relevant dimensions are both 1 mm). It should be remembered that a complete wave corresponds to each point of the C-Scan representation. Waves are taken from both areas and saved in respective matrices, to which reference is made using the same $Z_w$ and $Z_b$ references used to indicate the respective areas, with respective dimensions of w1·w2 and b1·b2 (for example, w1 and b1 refer to the rows and w2 and b2 to the columns of the respective matrices $Z_w$ and $Z_b$). In the following, for simplicity of description, it is assumed that the defect has a length and width respectively oriented in the direction of the columns and the rows of the matrix $Z_w$. It is also assumed that w2 is larger than the width of the defect and that this is within the range (1, w2), and that w1 coincides with the length of the defect that it is wished to characterize (otherwise, the procedure should be repeated for further areas until all those of interest are completed).

In step 91, all of the waves in $Z_w$ and $Z_b$ are normalized. Normalization consists of two consecutive operations: amplitude normalization and offset compensation of the times of flight.

Amplitude normalization ensures that all of the waves have the maximum and minimum equal to two predetermined values (henceforth indicated as $A_{MAX}$ and $A_{MIN}$; normally, $A_{MAX} = -A_{MIN}$). This is performed as follows. $A_{wMAX}(i,j)$ and $A_{wMIN}(i,j)$ are respectively the maximum and minimum of the amplitude of the wave in position (i,j) of matrix $Z_w$ (with i=1, ..., w1 and j=1, ..., w2). Similarly, $A_{bMAX}(l, m)$ and $A_{bMIN}(l,m)$ are respectively the maximum and minimum of the amplitude of the wave in position (l,m) of matrix $Z_b$ (with l=1,...,w1 and m=1,...,w2). If $A_w(i,j;t)$ and $A_b(l,m;t)$ are respectively the amplitudes based on time of the wave in position (i,j) in matrix $Z_w$, and of the wave in position (l,m) in matrix $Z_b$, by applying the following linear formulae:

$$A_{w1}(i,j;t) = \frac{A_{MAX} - A_{MIN}}{A_{wMAX}(i,j) - A_{wMIN}(i,j)}(A_w(i,j;t) - A_{wMIN}(i,j;t)) + A_{MIN} \qquad (13)$$

$$A_{b1}(l,m;t) = \frac{A_{MAX} - A_{MIN}}{A_{bMAX}(l,m) - A_{bMIN}(l,m)}(A_b(l,m;t) - A_{bMIN}(l,m;t)) + A_{MIN} \qquad (14)$$

the corresponding normalized values $A_{w1}(i,j;t)$ and $A_{b1}(l,m;t)$ are obtained. It should be noted that the time t varies in a discrete manner (for simplicity, it is assumed that t=0 corresponds to 0 $\mu$s) and therefore that:

- each step $\delta t$ depends on the sampling frequency $\nu_f$ (for example, for $\nu_f$ = 100 MHz, $\delta t$ = 0.01 $\mu$s), and so the values of t can be produced from the discrete variable $\tau$ ($\tau = 0,1,...$), such that t = $\delta t \cdot \tau$. In the following, when necessary, the F(t) type functions will also be indicated as $F_\tau$;
- the maximum value of t depends on the chosen set-up (or rather on the upper end of the acquisition gate Cacq).

Offset compensation of the times of flight, implemented on the amplitudes $A_{w1}$ and $A_{b1}$, ensures that the maximum amplitude of the front echo is located at the origin of the time axis, i.e. at t=0. If for the wave $A_{x1}(p, q)$, where with reference to the formulae (13) and (14) subscript x can be x=w or x=b, the front echo has its maximum at $t_{MAX}$, then, assuming that t=0,...,$t_f$, the compensation with which the compensated waves $A_{xn}(p,q)$ are generated is obtained using the formula (15):

$$A_{xn}(p,q;t) = \begin{cases} A_{x1}(p,q;t - t_{MAX}) & se \quad 0 \le t \le t_f - t_{MAX} \\ 0 & se \quad t > t_f - t_{MAX} \end{cases} \qquad (15)$$

After normalization, where the matrices $Z_{wn}$ and $Z_{bn}$ containing the normalized waves $A_{wn}$ and $A_{bn}$ are generated, step 92 is executed, according to which two mean waves, $A_{wm}(t)$ and $A_{bm}(t)$ are obtained, which synthesize the characteristics of the defective area and the defect-free area respectively. $A_{wm}(t)$ and $A_{bm}(t)$ are obtained through formulae (16) and (17):

$$A_{wm}(t) = \frac{1}{w1 \cdot w2}\sum_{i=1}^{w1}\sum_{j=1}^{w2} A_{wn}(i,j;t) \qquad (16)$$

$$A_{bm}(t) = \frac{1}{b1 \cdot b2}\sum_{l=1}^{b1}\sum_{m=1}^{b2} A_{bn}(l,m;t) \qquad (17)$$

Then, in step 93, the matrix of peak-to-peak values $V_{pp}(i,j)$ of the back echoes (now situated between $t_i = T_{BI} - T_{MAX}$ and $t_f = T_{BF} - T_{MAX}$) of the waves $A_{wn}(t)$ is generated, using the formula (18) :

$$V_{pp}(i,j) = \max\{A_{wn}(i,j;t)\} - \min\{A_{wn}(i,j;t)\} \qquad (18)$$

with t between ($t_i$ and $t_f$).

Following this, in step 94, through formula (19), the row vector $V_{ppm}(j)$ is obtained by averaging the columns of $V_{pp}(i,j)$ and inverting with respect to the maximum value:

$$V'_{ppm}(j) = \frac{1}{wl}\sum_{i=1}^{wl} V_{pp}(i,j) \qquad V_{ppm}(j) = \left| V'_{ppm}(j) - V'_{max} \right| \qquad (19)$$

with $V'_{max} = \max(V'_{ppm}(j))$.

The sequence of values $V_{ppm}(j)$ forms a curve that can be approximated by means of a standard best-fit procedure. In particular, the applicant has established that the sequence that can be approximated with a Gaussian function, characterized by a standard deviation $\sigma_{ppm}$, for the purposes of measurement in question. The wrinkle width is calculated in the successive step 95 using the formula (20):

$$L_w \;=\; 2 \cdot \sigma_{ppm} \qquad\qquad (20)$$

The part of the procedure dedicated to measuring wrinkle depth $P_w$ starts in step 96, beginning with the generation of the difference signal D(t) as per formula (21):

$$D(t) = A_{gm}(t) - A_{bm}(t) \qquad\qquad (21)$$

The logarithmic spectrogram $\Gamma(v, \tau)$ of this vector is constructed using the formula (22):

$$\Gamma(v,\tau) = 20\log_{10}\left| \sum_{n=0}^{n_f} D_{n+\tau}\, e^{-\frac{2\pi i}{n_f+1}vn} \right| \qquad\qquad (22)$$

where $v=0, ..., n_f$, $n_f$ is normally equal to 255 and i is the imaginary unit.

As is known, the spectrogram is a time-varying spectral representation that shows how the spectral density of a signal varies over time. The variables $v$ and $\tau$ have already been defined in the foregoing and are related to values of sampling frequency (v) and time ($\tau$). In particular, $\tau$ is a discrete variable ($\tau$=0,1, ...) such that the time values t can be constructed from the discrete variable $\tau$ as t=$\delta$t·$\tau$ (time is therefore representable both with variable t and with variable $\tau$).

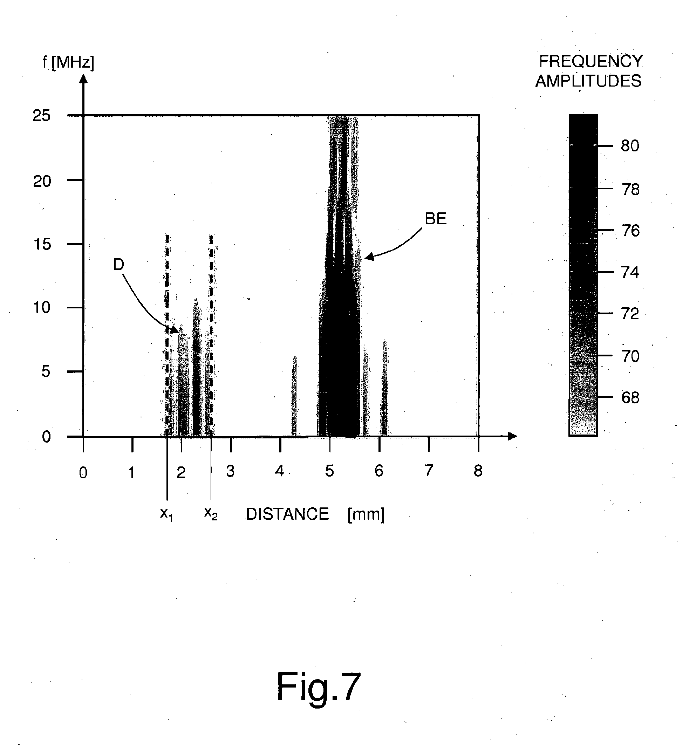

In step 97, the spectrogram is generated and then evaluated. The representation is a colour map, having the depth values x=$\delta$t·$\tau$·($V_{US}$/2) on the abscissae axis, the frequencies f=$v$/$\delta$t of the ordinates axis and the values $\Gamma(v, \tau)$ in range $\gamma_1$ and $\gamma_2$ for the colour of the pixels. Typically, $\gamma_1$=0.73·$\Gamma_{max}$ and $\gamma_2$=0.90·$\Gamma_{max}$, where $\Gamma_{max}$ is the maximum of $\Gamma(v, \tau)$ in $v$ and $\tau$; the values of $\gamma_1$ and $\gamma_2$ can be set more finely in the calibration stage. Peaks appear in this representation (please refer to Figure 7 for an example). The peak related to the initial echo tends to be negligible, while the peak related to the back echo and the defect peak normally appear. Assuming the defect peak to be located between $x_1$ and $x_2$, the depth of the wrinkle can be calculated using the formula (23):

$$P_w \;=\; x_2 - x_1 \qquad\qquad (23)$$

At this point, the process terminates.

According to the present invention, the disclosed method is implemented by an ultrasonic scanning and inspection system able to ensure the acquisition, with the requested accuracy, precision and resolution, of the reflected ultrasonic waves according to the previously specified set-up parameters. In particular, beyond the specifically ultrasonic parameters (e.g., frequency of the waves) and those of acquisition (dynamic and sampling frequency of the analogue-digital conversion), the processes also require that all of the surfaces of the part to be inspected be adequately scanned. Now, while the scanning of open flat or curved surfaces is commonly achievable by means of commercial systems, the scanning of internal (flat or curved) surfaces of large closed structures is not easily implemented.

Figure 8A shows a scanning system 100 configured to implement the previously described method.

The scanning system 100 is also configured to implement scanning methodologies that could be used generically for ultrasonic inspection using internal wave reflection, with or without filler, of the cores of open or closed structures in composite materials or metal, having, for example, a C, T, L, I or J type of geometry, or yet another type of geometry.

The scanning system 100 includes means to implement curvilinear scanning (for example, of region 102 of the structure portion 101 in Figure 8A) and azimuth scanning (for example, of region 104 of the structure portion 101 in Figure 8A). The scanning system 100 moves, for example, along the direction of Z-axis. The structure portion shown in Figure 8A is, for example, a portion of the structure 2 in Figure 1. In this case, region 102 in Figure 8A corresponds to one of the regions 6 in Figure 1.

In order to carry out a scan of the curvilinear areas (region 102), the scanning system 100 comprises a body 105, to which a first scan head 106 is connected, configured to be moved along the Z-axis in steps $\Delta Z$. The first scan head 106 includes a rotating portion 108, fixed for example by an opportune pin 107 able to turn around the Z-axis (please see the arrows that indicate the rotation in the enlarged view in Figure 8B). The rotation of the pin 107 is controlled, for example, by a motor (described in greater detail further on), and causes a corresponding rotation of the rotating portion 108, which approximately follows the curvature of region 102. The rotating portion 108 is configured to carry a probe 110, in particular an ultrasonic probe able to generate ultrasonic waves incident on the surface of region 102, and acquire reflected ultrasonic signals (echo signals), as already described in the foregoing with reference to the scanning method in Figure 2.

The first scan head 106 is rigidly connected to the body 105 by means of a rod 112 made, for example, of an aluminium alloy, plastic or other material of equivalent rigidity and not subject to phenomena of rapid deterioration (due to loosening, corrosion, etc.) caused by the action of scanning and by the coupling fluid possibly used between the probe 110 and the surface of region 102 to which the probe 110 is coupled.

The rest position (0°) of the rotating portion 108 of the scan head 106 corresponds, for example, to an orientation of the probe 110 orthogonal to the support surface of the body 105 (in the representation in Figure 8A, the body 105 rests on the XZ plane). The maximum opening depends on the angle $\theta_{max}$ between the support surface (as mentioned, on the XZ plane) and the surface of region 104 (in Figure 8A, this angle is approximately 90°, as region 104 on the YZ plane is orthogonal to the XZ plane). The rotating portion 108 is therefore controllable via the angle $\theta$, which describe the rotation between 0° and $\theta_{max}$ with predefined rotational steps $\Delta\theta$. For each step $\Delta Z$ along the Z-axis, the rotating portion 108 is driven in rotation from 0° to the maximum permitted opening ($\theta_{max}$), with a step $\Delta\theta$. For each of these steps $\Delta\theta$, an ultrasonic signal is generated and a respective return signal is acquired. It is obvious that the rotating head 108 can turn through any angle between 0° and 360° according to the needs deriving from the specific application and structure to be analysed.

The values of step $\Delta\Theta=r\cdot\Delta\theta$ (r being the radius of the osculating circle corresponding to area 102) and $\Delta Z$ are variable and depend on the specific application; in general, they are comprised in the range between approximately 0.1 mm and 3.0 mm.

Figure 9 shows a portion of the scanning system 100 in greater detail; in particular, it shows the first scan head 106 according to an embodiment of the present invention.

The first scan head 106 comprises a motor 116 with or without an encoder, with typical torque of 24 Kg·cm (for example, a Hitec HSR 5990-TG motor) connected to the rotating portion 108 and configured to move the rotating portion 108 along the radius profile, with step $\Delta\theta$ as previously described; the typical scanning speed is in the 0.01-0.03 m/s range. However, the applicant has established that greater speeds are possible and do not invalidate the scanning characteristics and objectives.

The first scan head 106 further comprises first movement means 118a-118d, for example, in the form of wheels able to move the first scan head 106 on the YZ plane; second movement means 120a, 120b, for example, in the form of wheels able to move the first scan head 106 on the XZ plane; and third movement means 122a-122d, for example, in the form of freewheels connected to one end of the rotating portion 108, and able to rest against region 102 and follow the curved profile during the steps of ultrasonic analysis in accordance with the method implemented by the inspection system according to the present invention.

In an equivalent manner, not shown, it is possible to use sliding films (perforated at the centre, next to the probe) which dynamically match the curved profile of region 102, or laser-based profile tracking systems and subsequent robotized actuation of the acquired trajectory.

The rotating portion 108 includes a cavity 124a able to house the probe 110. According to the described and illustrated embodiment, the rotating portion 108 houses a single probe 110. Alternatively, the rotating portion 108 could house a plurality of probes 110 or a probe vector 110.

The rotating portion 108 can be made of polymethyl methacrylate, Plexiglas for example; metal, an aluminium alloy for example; an elastomeric material, aqualene for example; or yet another material, as long as it is undeformable in the scanning step and does not deteriorate quickly (due to loosening, corrosion, etc.) due to the action of scanning and the coupling fluid; the latter is applied directly on the scanned surface or transferred to it through the hole 126 leaving cavity 124a, connected by a passage to cavity 124b, in turn connected to a source of fluid.

The coupling can also be achieved by means of probes with crystals immerged in opportune gels of known type, enclosed in membranes that self-adapt to the scanned surfaces. The self-adaptation of the rotating portion 108 to various types of curvilinear surfaces, or to a surface with an uneven radius of curvature, as well as the self-adaptation of the coupling pressure, is obtained by means of a system based on pistons 127 able to operate in extension and compression, and/or precision springs 130. More in detail, the springs 130 are connected between the rotating structure 108 and the pistons 127. According to an alternative embodiment, the pistons are substituted by non-extendible supports, or yet another type of support. The elastic constant of the springs is typically approximately 0.09 N/mm, depending on the specific application. Alternatively, other known systems can be used, such as hydraulic ones for example.

With reference to Figure 8A, to carry out an azimuth scan (scanning of region 104, on the YZ plane) the scanning system 100 further comprises a second scan head 128, connected to the body 105 by a rod 130 similar to the previously described rod 112.

During the azimuth scan, after each advancement of step $\Delta Z$ along the Z-axis, the second scan head 128 moves along trajectories that describe circumference arcs C along region 104. As motion is constrained, the movement is determined by the step utilized; on each of these steps, an ultrasonic signal is generated and acquired.

The second scan head 128 is similar to the first scan head 106 and houses a respective probe 132, configured to generate an ultrasonic signal and acquire an echo signal generated by the structure under analysis in response to the generated ultrasonic signal. Alternatively, depending on the applications, the second scan head 128 could house a plurality of probes, probe vectors or phased-array devices.

The second scan head 128 further comprises its own means of support and motion, for example wheels, able to permit fluid and delicate movement of the second scan head 128 on the surface of region 104.

In addition to the circular movement in the YZ plane, it is also possible to perform a radial type of scan. In this case, rod 130 includes an extension mechanism of a controlled-pressure hydraulic type, or a telescopic system, in order to allow the length of the rod 130 to be varied. The typical scanning speed, independently of the type of scan, is in the 0.2-0.5 m/s range.

Motion of the second scan head 128, by means of rod 130, is performed using a motor 138 housed in the body 105 and connected to rod 130 by opportune means of transmission, for example a chain or belt transmission. The motor 138 is of the type with or without an encoder, for example, a stepper motor, with typical torque of 12 Kg·cm, and even more in particular, a SANYODENKI series 103-H7123-0740 motor.

The second scan head 128 can comprise start/end of travel detectors 142a, 142b, made using lever microswitches (for example, pre-wired Saia-Burgess V4NSUL 5A@250Vac Lever microswitch), to automatically recognise a scanning start point and a scanning end point of region 104 in the case where region 104 is laterally delimited by constraints, for example walls able to interact, during use, with the start/end of travel detectors 142a, 142b. In an equivalent manner, it is possible to use a laser tracking system on the profile of region 104, with subsequent robotized actuation of the thus-acquired trajectory (not shown).

Also in the case of the second scan head 128, as already described with reference to the first scan head 106, the coupling between the probe 132 carried by the second scan head 128 and the surface of region 104 is obtained by means of a column of water (or other coupling fluid). Alternatively, probes with crystals immerged in coupling gel enclosed in membranes that self-adapt to the scanned surfaces can be used. Similarly, it is possible to provide a self-adapting coupling system between the second scan head 128 and region 104, configured to generate an opportune coupling pressure. This self-adapting system includes, for example, precision springs (with a typical elastic constant of 0.09 N/mm), and/or pistons, similar to that described and shown with reference to the first scan head 106. Alternatively, a hydraulic system could be used.

The body 105 of the scanning system 100 further includes a motor 150, integrated in the body 105 or external to it, preferably a motor with encoder (similar to motor 138 for example). Motor 150 is configured to control the scanning system 100 along the Z-axis. The advancement speed $V_a$ of the scanning system 100 depends on the time taken by the first and the second scan head to complete their respective scans, at all of the planned scan points. Taking into account that the longitudinal motion of the scanning system 100 along the Z-axis takes place on generally rough surfaces and in the presence of the coupling fluid (generally water, as stated), the device uses rubberized wheels 155 for moving (a soft mix with a hardness of approximately 50 Shore), shaped so as to guarantee optimal grip on the surface traversed, without slippage and/or floating. In general, the wheels can be of different materials, as long as the friction does not induce abrasive phenomena on the surface traversed.

The scanning system 100 further comprises a microprocessor 200 and a memory 202, housed in the body 105 for example, and connected to the motors 116, 138 and 150. The microprocessor 200 is configured to control operation of motor 150 in order to drive the scanning system 100 along the Z-axis (in $\Delta Z$ steps), control operation of motor 138 in order to move the second scan head 128 (in $\Delta Y$ steps) over the surfaces to be analysed (for example, region 104), and to control operation of motor 116 in order to move the rotating portion 108 of the first scan head 106 (in $\Delta \Theta$ steps) over the surfaces to be analysed (for example, region 102).

The microprocessor 200 implements the steps of the method of analysis implemented by the inspection system according to the present invention (described with reference to Figure 2). The instructions for the microprocessor 200 that define the steps of the method in Figure 2 are, for example, stored in the memory 202 in the form of a software program. Alternatively, the microprocessor 200 and the memory 202 could be substituted by software implemented on an external computer connected to the scanning system 100.

The applicant has also established that scanning system 100 could move on a track (not shown), arranged along the Z-axis, and housing a toothed and calibrated rubber belt. In this case, the motor 150 does not need an encoder, as it is the belt that guarantees actuation of the $\Delta Z$ steps. A further alternative for the scanning system 100 is based on technologies known as "pipe crawlers": the first and the second scan head 106 and 128 can thus be mounted on crawler systems (for example, the INSPECTOR Type 1000/2000 from Inspector Systems). This latter solution also permits associating optical inspections (for example, using laser, but not only this) with the ultrasonic inspection.

In the case of structures with a number of curved areas (i.e. C, T, I and J types), the inspection around the curved regions (see, for example, regions 6 in Figure 1 or region 102 in Figure 8A) can be carried out simultaneously on a plurality of these curved regions. For example, a single scanning system 100 could comprise a plurality of first scan heads 106, each of which is able to couple with a respective curved region by means of a respective rod of opportune length and shape connected to the body 105. In this way, for example, for structures of the type shown in Figure 1, it is possible to simultaneously inspect the four regions indicated by reference numeral 6.

Alternatively, to avoid making a plurality of motion systems, each one comprising a different number of rods with respective scan heads, it is possible to couple together, only when necessary, two or more motion systems 100 of the type shown in Figure 8A. The coupling can be performed magnetically by permanent magnets in sintered neodymium-iron-boron with the following typical specifications: remanence = 12 kGs; coercivity = 11 kOe; intrinsic coercivity = 12 kOe; maximum magnetic energy density = 270 kJ/m$^2$.

For structures with a long Z dimension with respect to that of the scanning system 100, the applicant has also verified the possibility of using vectors comprising a plurality of motion systems 100 arranged in line with each other, thereby reducing the inspection times. In fact, if n is the number of devices used, the scanning time is approximately (1/n) times that of a single-device system.

In a way not shown in the figure, the motion device 100 can further comprise a third scan head, similar to the second scan head 128, configured to carry out an inspection on a surface parallel to the XZ plane.

Alternatively, the motion device 100 can comprise a single scan head configured to carry out both the movements of the first scan head 106 and those of the second scan head 128 (and if necessary, those of the third scan head, if present).

From an examination of the inspection system according to the present invention, the advantages that can be achieved with it are evident.

In general, apart from the more common defects that can be diagnosed, such as delaminations, porosity, cavities, inclusions and separations, the possibility of detecting internal wrinkles in a composite structure of any shape and measuring the main dimensions, whether or not associated with pockets, enables the quality of the product to be significantly increased, reducing the number of parts erroneously accepted and, at the same time, reducing the production costs of the structures by reducing the number of erroneously rejected parts.

The broadening of the diagnostic capacity to defects in the layers of material also widens the range of possible structure configurations in the design stage with regard to damage tolerance criteria.

In the specific instance, the analysis and measurement method does not depend on particular or specially made equipment, instruments or probes. It is based on ultrasonic inspections that can be performed at the same time as conventional ones, normally used in production. The method is applicable to parts of any geometry and size, both open structures by means of commercially available scanning systems and closed structures, for which it is preferable to use the scanning system 100.

Finally, the method lends itself to total automation, both in the scanning stage and in the processing and diagnostic stage.

In conclusion, it is understood that changes and modifications may be made to the method described and shown herein without leaving the scope of protection of the present invention, as defined in the appended claims.

In particular, the following fall within the invention's scope of protection:

different choices for the characteristics, also in frequency, of the probes and the measurement apparatus, the methods and "best fitting" curves, the experimental calibration, the thresholds, the gate parameters and the methods of scanning;

- application of the system to reflective ultrasonic techniques other than those indicated by way of example in the description; such techniques include, but are not limited to, airborne ultrasound, laser-ultrasonics and phased-array;

- application of the system to supplement or replace a standard inspection;
- a different process flowchart regarding Figure 2, in which the steps are performed in different order from that shown and described;
- application of the system to materials or combinations of materials other than composite materials in carbon resin;
- application of the system to defects of any type, including, but not limited to, deformations orthogonal to the inspection plane of layers forming a material, and inclusions or cavities causing internal deformations orthogonal to the inspection plane.

**Claims**

1. An ultrasonic non-destructive inspection system for a composite material structure (2) including a first incidence surface and a first back surface arranged at a distance from the incidence surface, to detect at least a first defect (4) located between the first incidence surface and the first back surface, comprising:

   - a first scanning probe (110; 132);
   - a first motor (116; 138) configured to move the first scanning probe to a plurality of first inspection points along a first scanning direction of the structure (2),

   said scanning probe being configured to generate (20; 50), for each of the first inspection points, an ultrasonic signal incident on said first incidence surface and acquire (20; 50) a reflected ultrasonic signal indicative of the presence of the first defect (4); and

   - processing means (200, 202), including a microprocessor (200), configured to:

      process (24; 52; 91-93), by the microprocessor, for each of said first inspection points, the reflected ultrasonic signal in order to extract a first echo signal related to a defect reflection (D) generated by the first defect in response to the incident ultrasonic signal;
      associate (24; 52; 91-93), by the microprocessor, an amplitude value and a time-of-flight value with the first echo signal, the time-of-flight value being the value of the time duration elapsed between an initial time instant and a time instant of acquisition of the first echo signal;
      fit (54; 94), by the microprocessor, by means of respective first and second interpolation functions, the amplitude and time-of-flight values associated with the first echo signals extracted for all the inspection points of said plurality of first inspection points; and
      estimate (58; 65; 68; 70; 95; 97), by the microprocessor, a first dimension (Lw) of said first defect (4) on the basis of at least one parameter of the first or second interpolation function, the first dimension being a width of the first defect (4) in the first scanning direction,
      **characterized in that**:

      the first motor (116; 138) is further configured to move the first scanning probe to a plurality of second inspection points along a second scanning direction of a reference structure having an incident surface, a back surface and being free of defect (4) between the incidence surface and the back surface,
      said scanning probe is further configured to generate (90), for each of the second inspection points at the incidence surface, an incident ultrasonic reference signal and acquire (90) a respective reflected reference signal,
      said processing means (200, 202) are further configured to:

         process (91-93), by the microprocessor, for each of the second inspection points, the respective reflected reference signal to extract a respective second echo signal related to a reflection of the portion of the reference structure in between the incidence surface and the back surface;
         associate (91), by the microprocessor, for each of the second inspection points, a respective amplitude reference with the respective second echo signal value;
         normalize (91), by the microprocessor, for each of the first inspection points, the amplitude values of the first echo signal, obtaining a first normalized signal;
         normalize (91), by the microprocessor, for each of the second inspection points, the amplitude values of the second echo signal, obtaining a second normalized signal;
         generate, by the microprocessor, a first mean signal by calculating the mean value of the amplitude values of the first echo signals related to the first inspection points;

generate, by the microprocessor, a second mean signal by calculating the mean value of the amplitude values of the second echo signals related to the second inspection points;

subtract (96), by the microprocessor, the first and the second mean signals from each other, obtaining a difference signal (D(t));

define (96), by the microprocessor, a time-varying spectral representation of said difference signal (D(t)), by calculating the spectral density of the difference signal over time; and

obtaine (97), by the microprocessor, a second dimension (Pw) of the first defect (4) on the basis of said spectral representation, the second dimension being a depth (Pw) of the first defect (4).

2. The system according to claim 1, wherein said spectral representation is a logarithmic spectrogram.

3. The system according to claim 1 or 2, wherein the first and second interpolation functions are Gaussian functions, said parameter of the first or second interpolation function including the value of the standard deviation of the respective Gaussian function, the step of estimating the first dimension (Lw) comprising calculating (95) a value equal to twice the standard deviation.

4. The system according to claim 1 or 2, wherein the first interpolation function is a Gaussian function, said processing means, in order to execute said operation of estimate, being further configured to:

- calculate (54), by the microprocessor, a maximum value (max[Ga(k)]) of the Gaussian function;
- calculate (54), by the microprocessor, a threshold value ($h_1$·max[Ga(k)]) as a fraction of the maximum value of the Gaussian function;
- determine (54), by the microprocessor, a first and a second intermediate point (k1, k2) along the first scanning direction such that the Gaussian function calculated in the first and in the second intermediate point has a value equal to the threshold value ($h_1$·max[Ga(k)]); and
- calculate (54, 64, 70), by the microprocessor, the first dimension (Lw) as a linear function of the distance between the first and the second intermediate point (k1, k2).

5. The system according to any one of the preceeding claims, wherein the processing means are further configured to:

- for each of said first inspection points, normalize the amplitude values of the first echo signal, obtaining a respective normalized signal with a maximum peak amplitude value and a minimum peak amplitude value,
- for each normalized signal, calculate a respective peak-to-peak amplitude value, said peak-to-peak amplitude value being the range of amplitudes included between the maximum peak amplitude value and the minimum peak amplitude value,

said operation of associating (24; 52; 91-93) an amplitude value to the first echo signal comprising associating the respective peak-to-peak amplitude value to the first echo signal, and

said operation of fitting (54; 94) the amplitude values comprising fitting the peak-to-peak amplitude values.

6. The system according to any of the preceding claims, wherein said first motor (116; 138) and first scanning probe (110; 132) are operable, before generating the incident ultrasonic signal and the incident ultrasonic reference signal, to carry out (10) a preliminary ultrasonic inspection of the structure (2), the processing means being further configured to analyse (14) a result of said preliminary ultrasonic inspection.

7. The system according to any one of the preceeding claims, comprising a body (105) moveable along a direction of advancement, the first scanning probe (110; 132) being connected to the body (105) by a first rod (112; 130).

8. The system according to any one of claims 1-7, wherein the structure (2) further includes a second incidence surface and a second back surface arranged at a distance from the second incidence surface, to detect at least a second defect (4) located between the second incidence surface and the second back surface, the system further comprising:

- a second scanning probe (132; 110);
- a second motor (138; 116) configured to move the second scanning probe to a plurality of second inspection points along a second scanning direction of the structure (2), wherein the processing means (200, 202) are further configured to:

process (24; 52; 91-93), by the microprocessor, for each of said second inspection points, the reflected ultrasonic signal to extract a second echo signal related to a defect reflection (D) generated by the second defect in response to the incident ultrasonic signal;

associate (24; 52; 91-93), by the microprocessor, an amplitude value and a time-of-flight value with the second echo signal,

the time-of-flight value being the value of the time duration elapsed between an initial time instant and a time instant of acquisition of the second echo signal;

fit (54; 94), by the microprocessor, by means of said first and second interpolation functions, the amplitude and time-of-flight values associated with the second echo signals extracted for all the inspection points of said plurality of second inspection points; and

estimate (58; 65; 68; 70; 95; 97), by the microprocessor, at least a first dimension (Lw; Pw) of said second defect (4) on the basis of at least one parameter of the first or second interpolation function.

9. The system according to claim 8, wherein the body (105) houses the second motor (138; 116), the second scanning probe (132; 110) being connected to the second motor (138; 116) by a second rod (130; 112).

10. The system according to any one of the preceeding claims, wherein the first scanning probe (110) is supported by a first scan head (106) housing the first motor (116), said first motor (116) being a stepper motor coupled to the first scanning probe (110) to control the rotational movement of the first scanning probe (110).

11. The system according to claim 10 when depending on claim 2, wherein said rotational movement is centred around an axis parallel to the direction of advancement of the body (105).

12. The system according to claim 9, wherein the second scanning probe (132) is supported by a second scan head (128), the second motor (138) being a stepper motor coupled to a second rod (130; 112) to control the movement of the second scanning probe (132) on the second incidence surface.

**Patentansprüche**

1. Zerstörungsfreies Ultraschallinspektionssystem für eine Verbundwerkstoffstruktur (2) mit einer ersten Einfallsoberfläche und einer ersten hinteren Oberfläche, die in einem Abstand von der Einfallsoberfläche angeordnet ist, um zumindest einen ersten Defekt (4) zu ermitteln, der sich zwischen der ersten Einfallsoberfläche und der ersten hinteren Oberfläche befindet, welches aufweist:

- eine erste Scansonde (110; 132);
- einen ersten Motor (116; 138), welcher ausgebildet ist, die erste Scansonde zu einer Vielzahl von ersten Prüfpunkten entlang einer ersten Scanrichtung der Struktur (2) zu bewegen, wobei die Scansonde zum Erzeugen (20; 50) eines Ultraschallsignals, welches auf die erste Einfallsoberfläche einfällt, für jeden der ersten Prüfpunkte und zum Erfassen (20; 50) eines reflektierten Ultraschallsignals, welches das Vorliegen des ersten Defekts (4) anzeigt, ausgebildet ist; und
- Verarbeitungsmittel (200, 202) mit einem Mikroprozessor (200), welche ausgebildet sind, zum:

Verarbeiten (24; 52; 91-93) des reflektierten Ultraschallsignals für jeden der ersten Prüfpunkte durch den Mikroprozessor, um ein erstes Echosignal zu extrahieren, welches sich auf die Defektreflexion (D) bezieht, welche durch den ersten Defekt als Antwort auf das einfallende Ultraschallsignal erzeugt wird;

Zuordnen (24; 52; 91-93) eines Amplitudenwertes und eines Laufzeitwertes zu dem ersten Echosignal durch den Mikroprozessor, wobei der Laufzeitwert der Wert der Zeitdauer ist, die zwischen einem Anfangszeitpunkt und einem Zeitpunkt der Erfassung des ersten Echosignals vergangen ist;

Anpassen (54; 94) der Amplituden- und Laufzeitwerte, welche den ersten Echosignalen, die für alle Prüfpunkte der Vielzahl von ersten Prüfpunkten extrahiert wurden, zugeordnet sind, mittels entsprechender erster und zweiter Interpolationsfunktionen durch den Mikroprozessor; und

Schätzen (58; 65; 68; 70; 95; 97) einer ersten Dimension (Lw) des ersten Defekts (4) auf der Basis von mindestens einem Parameter der ersten oder zweiten Interpolationsfunktion durch den Mikroprozessor, wobei die erste Dimension eine Breite des ersten Defekts (4) in der ersten Scanrichtung ist,

**dadurch gekennzeichnet,**
**dass** der erste Motor (116; 138) weiter ausgebildet ist, um die erste Scansonde zu einer Vielzahl von zweiten Prüfpunkten entlang einer zweiten Scanrichtung einer Referenzstruktur, welche eine Einfallsoberfläche und eine hintere Oberfläche hat und zwischen der Einfallsoberfläche und der hinteren Oberfläche frei von Defekten (4) ist, zu bewegen,

wobei die Scansonde weiter ausgebildet ist, um für jeden der zweiten Prüfpunkte auf der Einfallsoberfläche ein einfallendes Ultraschallreferenzsignal zu erzeugen (90) und ein entsprechendes reflektiertes Referenzsignal zu erfassen (90),

die Verarbeitungsmittel (200, 202) weiter ausgebildet sind, zum:

Verarbeiten (91-93) des entsprechenden reflektierten Referenzsignals für jeden der zweiten Prüfpunkte durch den Mikroprozessor, um ein entsprechendes zweites Echosignal zu extrahieren, welches sich auf eine Reflexion des Bereiches der Referenzstruktur zwischen der Einfallsoberfläche und der hinteren Oberfläche bezieht;

Zuordnen (91) einer entsprechenden Amplitudenreferenz zu dem entsprechenden zweiten Echosignalwert für jeden der zweiten Prüfpunkte durch den Mikroprozessor;

Normalisieren (91) der Amplitudenwerte des ersten Echosignals für jeden der ersten Prüfpunkte durch den Mikroprozessor, um ein erstes normalisiertes Signal zu erhalten;

Normalisieren (91) der Amplitudenwerte des zweiten Echosignals für jeden der zweiten Prüfpunkte durch den Mikroprozessor, um ein zweites normalisiertes Signal zu erhalten;

Erzeugen eines ersten mittleren Signals mittels Berechnung des Mittelwertes der Amplitudenwerte der ersten Echosignale, welche sich auf die ersten Prüfpunkte beziehen, durch den Mikroprozessor;

Erzeugen eines zweiten mittleren Signals mittels Berechnung des Mittelwertes der Amplitudenwerte der zweiten Echosignale, welche sich auf die zweiten Prüfpunkte beziehen, durch den Mikroprozessor;

voneinander Subtrahieren (96) des ersten und des zweiten mittleren Signals durch den Mikroprozessor, um ein Differenzsignal (D(t)) zu erhalten;

Definieren (96) einer zeitveränderlichen Spektraldarstellung des Differenzsignals (D(t)) mittels Berechnung der Spektraldichte des Differenzsignals über der Zeit durch den Mikroprozessor; und

Erhalten (97) einer zweiten Dimension (Pw) des ersten Defekts (4) auf der Basis der Spektraldarstellung durch den Mikroprozessor, wobei die zweite Dimension eine Tiefe (Pw) des ersten Defekts (4) ist.

2.  System nach Anspruch 1,
    wobei die Spektraldarstellung ein logarithmisches Spektrogramm ist.

3.  System nach Anspruch 1 oder 2,
    wobei die ersten und zweiten Interpolationsfunktionen Gauss-Funktionen sind, wobei der Parameter der ersten oder zweiten Interpolationsfunktion den Wert der Standardabweichung der entsprechenden Gauss-Funktion hat, wobei der Schritt des Schätzens der ersten Dimension (Lw) das Berechnen (95) eines Wertes, der gleich zweimal der Standardabweichung ist, aufweist.

4.  System nach Anspruch 1 oder 2,
    wobei die erste Interpolationsfunktion eine Gauss-Funktion ist, wobei die Verarbeitungsmittel zum Ausführen der Schätzoperationen weiter ausgebildet sind zum:

    - Berechnen (54) eines Maximalwertes (max[Ga(k)]) der Gauss-Funktion durch den Mikroprozessor;
    - Berechnen (54) eines Grenzwertes ($h_1 \cdot$max[Ga(k)]) als ein Bruchteil des Maximalwertes der Gauss-Funktion durch den Mikroprozessor;
    - Bestimmen (54) eines ersten und eines zweiten Zwischenpunktes (k1, k2) entlang der ersten Scanrichtung durch den Mikroprozessor, so dass die Gauss-Funktion, welche in dem ersten und in dem zweiten Zwischenpunkt berechnet wurde, einen Wert aufweist, der gleich dem Grenzwert ($h_1 \cdot$max[Ga(k)]) ist; und
    - Berechnen (54, 64, 70) der ersten Dimension (Lw) als eine lineare Funktion des Abstandes zwischen dem ersten und dem zweiten Zwischenpunkt (k1, k2) durch den Mikroprozessor.

5.  System nach einem der vorangegangenen Ansprüche,
    wobei die Verarbeitungsmittel weiter ausgebildet sind zum:

    - Normalisieren der Amplitudenwerte des ersten Echosignals für jeden der ersten Prüfpunkte, wobei ein entsprechendes normalisiertes Signal mit einem maximalen Spitzenwert der Amplitude und einen minimalen Spitzenwert der Amplitude erhalten wird,
    - Berechnen eines entsprechenden Spitze-Spitze-Amplitudenwertes für jedes normalisierte Signal, wobei der Spitze-Spitze-Amplitudenwert der Bereich der Amplituden ist, die zwischen dem maximalen Spitzenwert der Amplitude und dem minimalen Spitzenwert der Amplitude enthalten sind,

wobei der Vorgang des Zuordnens (24; 52; 91-93) eines Amplitudenwertes zu dem ersten Echosignal ein Zuordnen des entsprechenden Spitze-Spitze Amplitudenwertes zu dem ersten Echosignal aufweist, und wobei der Vorgang des Anpassens (54; 94) des Amplitudenwertes das Anpassen des Spitze-Spitze-Amplitudenwertes aufweist.

6. System nach einem der vorangegangenen Ansprüche, wobei der erste Motor (116; 138) und die erste Scansonde (110; 132) vor dem Erzeugen des einfallenden Ultraschallsignals und des einfallenden Ultraschallreferenzsignals betreibbar sind, um eine vorläufige Ultraschallinspektion der Struktur (2) auszuführen (10), wobei die Verarbeitungsmittel weiter ausgebildet sind, um eine Resultat der vorläufigen Ultraschallprüfung zu analysieren (14).

7. System nach einem der vorangegangenen Ansprüche, welches aufweist:

   einen Körper (105), welcher entlang einer Fortschrittsrichtung bewegbar ist, wobei die erste Scansonde (110; 132) mit dem Körper über einen ersten Stab (112; 130) verbunden ist.

8. System nach einem der Ansprüche 1 bis 7, wobei die Struktur (2) weiter eine zweite Einfallsoberfläche und eine zweite hintere Oberfläche aufweist, die in einem Abstand von der zweiten Einfallsoberfläche angeordnet ist, um zumindest einen zweiten Defekt (4) zu ermitteln, der sich zwischen der zweiten Einfallsoberfläche und der zweiten hinteren Oberfläche befindet, wobei das System weiter aufweist:

   - eine zweite Scansonde (132; 110);
   - einen zweiten Motor (138; 116), welcher ausgebildet ist, die zweite Scansonde zu einer Vielzahl von zweiten Prüfpunkten entlang einer zweiten Scanrichtung der Struktur (2) zu bewegen,

   wobei die Verarbeitungsmittel (200, 202) weiter ausgebildet sind zum:

   Verarbeiten (24; 52; 91-93) des reflektierten Ultraschallsignals für jeden der zweiten Prüfunkte durch den Mikroprozessor, um ein zweites Echosignal zu extrahieren, welches sich auf die Defektreflextion (D) bezieht, welche durch den zweiten Defekt als Antwort auf das einfallende Ultraschallsignal erzeugt wird;
   Zuordnen (24; 52; 91-93) eines Amplitudenwertes und eines Laufzeitwertes zu dem zweiten Echosignal durch den Mikroprozessor, wobei der Laufzeitwert der Wert der Zeitdauer ist, die zwischen einem Anfangszeitpunkt und einem Zeitpunkt der Erfassung des zweiten Echosignals vergangen ist;
   Anpassen (54; 94) der Amplituden und Laufzeitwerte, welche den zweiten Echosignalen, die für alle Prüfpunkte der Vielzahl von zweiten Prüfpunkten extrahiert wurden, zugeordnet sind, mittels der ersten und zweiten Interpolationsfunktionen durch den Mikroprozessor; und
   Schätzen (58; 65; 68; 70; 95; 97) mindestens einer ersten Dimension (Lw; Pw) des zweiten Defekts (4) auf der Basis von mindestens einem Parameter der ersten oder zweiten Interpolationsfunktion durch den Mikroprozessor.

9. System nach Anspruch 8, wobei der Körper (105) den zweiten Motor (138; 116) aufnimmt, wobei die zweite Scansonde (132; 110) mit dem zweiten Motor (138; 116) über einen zweiten Stab (130; 112) verbunden ist.

10. System nach einem der vorangegangenen Ansprüche, wobei die erste Scansonde (110) von einem ersten Scankopf (106), welcher den ersten Motor (116) aufnimmt, gestützt ist, wobei der erste Motor (116) ein Schrittmotor ist, welcher mit der ersten Scansonde (110) gekoppelt ist um die Rotationsbewegung der ersten Scansonde (110) zu kontrollieren.

11. System nach Anspruch 10, wenn in Abhängigkeit zu Anspruch 2, wobei die Rotationsbewegung um eine Achse, welche parallel zu der Fortschrittsrichtung des Körpers (105) ist, zentriert ist.

12. System nach Anspruch 9, wobei die zweite Scansonde (132) von einem zweiten Scankopf (128) gestützt ist, wobei der zweite Motor (138) ein Schrittmotor ist, welcher mit einem zweiten Stab (130; 112) gekoppelt ist, um die Bewegung der zweiten Scansonde (132) auf der zweiten Einfallsoberfläche zu kontrollieren.

**Revendications**

1. Système d'inspection non-destructif à ultrasons pour une structure de matériau composite (2) présentant une première surface d'incidence et une première surface arrière agencée à une distance de la surface d'incidence, en vue de détecter au moins un premier défaut (4) situé entre la première surface d'incidence et la première surface arrière, comprenant :

   - une première sonde de balayage (110; 132) ;
   - un premier moteur (116; 138) configuré pour déplacer la première sonde de balayage vers une multiplicité de premiers points d'inspection le long d'une première direction de balayage de la structure (2), ladite sonde de balayage étant configurée pour générer (20; 50), pour chacun des premiers points d'inspection, un signal ultrasonore incident sur ladite première surface d'incidence et acquérir (20; 50) un signal ultrasonore réfléchi indicatif de la présente du premier défaut (4) ; et
   - des moyens de traitement (200, 202), comprenant un microprocesseur (200), configurés pour :

      - traiter (24; 52; 91-93), par le microprocesseur, pour chacun desdits premiers points d'inspection, le signal ultrasonore réfléchi en vue d'extraire un premier signal d'écho relié à une réflexion de défaut (D) générée par le premier défaut en réponse au signal ultrasonore incident ;
      - associer (24; 52; 91-93), par le microprocesseur, une valeur d'amplitude et une valeur de temps de vol au premier signal d'écho, la valeur de temps de vol étant la valeur de la durée temporelle écoulée entre un instant temporel initial et un instant temporel d'acquisition du premier signal d'écho ;
      - ajuster (54; 94), par le microprocesseur, au moyen d'une première et d'une deuxième fonctions d'interpolation respectives, les valeurs d'amplitude et de temps de vol associées aux premiers signaux d'écho extraits pour tous les points d'inspection de ladite multiplicité de premiers points d'inspection ; et
      - estimer (58; 65; 68; 70; 95; 97), par le microprocesseur, une première dimension (Lw) dudit premier défaut (4) sur la base d'au moins un paramètre de la première ou de la deuxième fonction d'interpolation, la première dimension étant une largeur du premier défaut (4) dans la première direction de balayage ;

   **caractérisé en ce que** :

      - le premier moteur (116; 138) est en outre configuré pour déplacer la première sonde de balayage vers une multiplicité de deuxièmes points d'inspection le long d'une deuxième direction de balayage d'une structure de référence ayant une surface d'incidence, une surface arrière et étant exempte de défauts (4) entre la surface d'incidence et la surface arrière ;
      - ladite sonde de balayage est en outre configurée pour générer (90), pour chacun des deuxièmes points d'inspection à la surface d'incidence, un signal de référence ultrasonore incident et acquérir (90) un signal de référence réfléchi respectif,

   lesdits moyens de traitement (200, 202) sont en outre configurés pour :

      - traiter (91-93), par le microprocesseur, pour chacun des deuxièmes points d'incidence, le signal de référence réfléchi respectif pour extraire un deuxième signal d'écho respectif relié à une réflexion de la partie de la structure de référence entre la surface d'incidence et la surface arrière ;
      - associer (91), par le microprocesseur, pour chacun des deuxièmes points d'inspection, une référence d'amplitude respective à la deuxième valeur de signal d'écho respective ;
      - normaliser (91), par le microprocesseur, pour chacun des premiers points d'inspection, les valeurs d'amplitude du premier signal d'écho, obtenant un premier signal normalisé ;
      - normaliser (91), par le microprocesseur, pour chacun des deuxièmes points d'inspection, les valeurs d'amplitude du deuxième signal d'écho, obtenant un deuxième signal normalisé ;
      - générer, par le microprocesseur, un premier signal moyen en calculant la valeur moyenne des valeurs d'amplitude des premiers signaux d'écho reliés aux premiers points d'inspection ;
      - générer, par le microprocesseur, un deuxième signal moyen en calculant la valeur moyenne des valeurs d'amplitude des deuxièmes signaux d'écho reliés aux deuxièmes points d'inspection ;
      - soustraire (96), par le microprocesseur, le premier et le deuxième signaux moyens l'un de l'autre, obtenant un signal de différence [D(t)] ;
      - définir (96), par le microprocesseur, une représentation spectrale variant dans le temps dudit signal de différence [D(t)], en calculant la densité spectrale du signal de différence en fonction du temps ; et
      - obtenir (97), par le microprocesseur, une deuxième dimension (Pw) du premier défaut (4) sur la base de ladite représentation spectrale, la deuxième dimension étant une profondeur (Pw) du premier défaut (4) .

2. Système selon la revendication 1, dans lequel ladite représentation spectrale est un spectrogramme logarithmique.

3. Système selon la revendication 1 ou 2, dans lequel la première et la deuxième fonctions d'interpolation sont des fonctions gaussiennes, ledit paramètre de la première ou de la deuxième fonction d'interpolation comprenant la valeur de l'écart type de la fonction gaussienne respective, l'étape d'estimation de la première dimension (Lw) comprenant le calcul (95) d'une valeur égale à deux fois l'écart type.

4. Système selon la revendication 1 ou 2, dans lequel la première fonction d'interpolation est une fonction gaussienne, lesdits moyens de traitement, dans le but d'exécuter ladite opération d'estimation, étant en outre configurés pour :

- calculer (54), par le microprocesseur, une valeur maximale (max[Ga(k)]) de la fonction gaussienne ;
- calculer (54), par le microprocesseur, une valeur de seuil ($h_1 \cdot$max[Ga(k)]) comme une fraction de la valeur maximale de la fonction gaussienne ;
- déterminer (54), par le microprocesseur, un premier et un deuxième points intermédiaires (k1, k2) le long de la première direction de balayage de telle manière que la fonction gaussienne calculée dans le premier et dans le deuxième points intermédiaires ait une valeur égale à la valeur de seuil ($h_1 \cdot$max[Ga(k)]) ; et
- calculer (54, 64, 70), par le microprocesseur, la première dimension (Lw) comme une fonction linéaire de la distance entre le premier et le deuxième points intermédiaires (k1, k2).

5. Système selon l'une quelconque des revendications précédentes, dans lequel les moyens de traitement sont en outre configurés pour :

- pour chacun desdits premiers points d'inspection, normaliser les valeurs d'amplitude du premier signal d'écho, obtenant un signal normalisé respectif avec une valeur d'amplitude de pic maximale et une valeur d'amplitude de pic minimale ;
- pour chaque signal normalisé, calculer une valeur d'amplitude de crête à crête respective, ladite valeur d'amplitude de crête à crête étant la plage d'amplitudes comprise entre la valeur d'amplitude de pic maximale et la valeur d'amplitude de pic minimale, ladite opération d'association (24; 52; 91-93) d'une valeur d'amplitude au premier signal d'écho comprenant l'association de la valeur d'amplitude de crête à crête respective au premier signal d'écho, et ladite opération d'ajustement (54; 94) des valeurs d'amplitude comprenant l'ajustement des valeurs d'amplitude de crête à crête.

6. Système selon l'une quelconque des revendications précédentes, dans lequel ledit premier moteur (116; 138) et ladite première sonde de balayage (110; 132) sont actionnables, avant la génération du signal ultrasonore incident et du signal de référence ultrasonore incident, pour exécuter (10) une inspection ultrasonore préliminaire de la structure (2), les moyens de traitement étant en outre configurés pour analyser (14) un résultat de ladite inspection ultrasonore préliminaire.

7. Système selon l'une quelconque des revendications précédentes, comprenant un corps (105) mobile le long d'une direction d'avancement, la première sonde de balayage (110; 132) état connectée au corps (105) par une première barre (112; 130).

8. Système selon l'une quelconque des revendications 1 à 7, dans lequel la structure (2) comprend en outre une deuxième surface d'incidence et une deuxième surface arrière agencée à une distance de la deuxième surface d'incidence, en vue de détecter au moins un deuxième défaut (4) situé entre la deuxième surface d'incidence et la surface arrière, le système comprenant en outre :

- une deuxième sonde de balayage (132; 110) ;
- un deuxième moteur (138; 116) configuré pour déplacer la deuxième sonde de balayage vers une multiplicité de deuxièmes points d'inspection le long d'une deuxième direction de balayage de la structure (2),

dans lequel les moyens de traitement (200, 202) sont en outre configurés pour :

- traiter (24; 52; 91-93), par le microprocesseur, pour chacun desdits deuxièmes points d'inspection, le signal ultrasonore réfléchi en vue d'extraire un deuxième signal d'écho relié à une réflexion de défaut (D) générée par le deuxième défaut en réponse au signal ultrasonore incident ;

- associer (24; 52; 91-93), par le microprocesseur, une valeur d'amplitude et une valeur de temps de vol au deuxième signal d'écho, la valeur de temps de vol étant la valeur de la durée temporelle écoulée entre un instant temporel initial et un instant temporel d'acquisition du deuxième signal d'écho ;
- ajuster (54; 94), par le microprocesseur, au moyen desdites première et deuxième fonctions d'interpolation respectives, les valeurs d'amplitude et de temps de vol associées aux deuxièmes signaux d'écho extraits pour tous les points d'inspection de ladite multiplicité de deuxièmes points d'inspection ; et
- estimer (58; 65; 68; 70; 95; 97), par le microprocesseur, au moins une première dimension (Lw; Pw) dudit deuxième défaut (4) sur la base d'au moins un paramètre de la première ou de la deuxième fonction d'interpolation.

9. Système selon la revendication 8, dans lequel le corps (105) contient le deuxième moteur (138; 116), la deuxième sonde de balayage (132; 110) étant connectée au deuxième moteur (138; 116) par une deuxième barre (130; 112).

10. Système selon l'une quelconque des revendications précédentes, dans lequel la première sonde de balayage (110) est supportée par une première tête de balayage (106) qui contient le premier moteur (116), ledit premier moteur (116) étant un moteur pas-à-pas couplé à la première sonde de balayage (110) pour commander le déplacement rotatif de la première sonde de balayage (110).

11. Système selon la revendication 10 lorsqu'elle dépend de la revendication 2, dans lequel ledit déplacement rotatif est centré autour d'un axe parallèle à la direction d'avancement du corps (105).

12. Système selon la revendication 9, dans lequel la deuxième sonde de balayage (132) est supportée par une deuxième tête de balayage (128), le deuxième moteur (138) étant un moteur pas-à-pas couplé à une deuxième barre (130; 112) pour commander le déplacement de la deuxième sonde de balayage (132) sur la deuxième surface d'incidence.

Fig.1a

Fig.1b

# Fig.2

Fig.3

Fig.4

Fig.5

38

START

Selection of area with defect
and defect-free area — 90

Calculate normalized signals — 91

Calculate representative
mean signals — 92

Calculate peak-to-peak values — 93

Gaussian function generation — 94

Calculate defect
width as 2σ — 95

Calculate signal difference and
logarithmic spectrogram — 96

Calculate defect depth — 97

END

Fig.6

Fig.7

Fig.8a

Fig.8b

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4475394 A
- US 6637266 B

- US 4914952 A
- US 6205859 B

### Non-patent literature cited in the description

- **D'ORAZIO et al.** Automatic ultrasonic inspection for internal defect detection in composite materials. *NDT & E INTERNATIONAL, BUTTERWORTH-HEINE-MANN, OXFORD, GB,* 15 December 2007, vol. 41 (2), 145-154

- **GOUEYGOU M. et al.** A comparative study of two non-destructive testing methods to assess near surface mechanical damage in concrete structures. *NDT and E. INTERNATIONAL,* 01 September 2008, vol. 41, 448-456